# EUROPÄISCHE PATENTSCHRIFT

(11) **EP 3 721 972 B1**
(45) Veröffentlichungstag und Bekanntmachung des Hinweises auf die Patenterteilung: **15.09.2021**
(21) Anmeldenummer: 19000282.4
(22) Anmeldetag: 11.06.2019
(51) Int. Cl.: B01D 53/26, B01J 20/08, B01J 20/10, B01J 20/16, C25B 1/04, C01B 3/58, C01B 13/02

(54) **VERFAHREN UND VORRICHTUNG ZUM TROCKNEN UND REINIGEN VON WASSERSTOFF ENTHALTENDEN GASEN**
METHOD AND DEVICE FOR DRYING AND CLEANING OF GASES CONTAINING HYDROGEN
PROCÉDÉ ET DISPOSITIF DE SÉCHAGE ET DE NETTOYAGE DES GAZ CONTENANT DE L'HYDROGÈNE

(30) Priorität: 09.04.2019 DE 202019001610 U
(43) Veröffentlichungstag der Anmeldung: 14.10.2020
(73) Patentinhaber: SILICA Verfahrenstechnik GmbH, 13509 Berlin (DE)
(72) Erfinder: Hartbrich, Andreas, 13467 Berlin (DE); Höhne, Gert, 13468 Berlin (DE); Jekow, Alexander, 17194 Blücherhof (DE)
(74) Vertreter: Hannig, Wolf-Dieter

(56) Entgegenhaltungen:
- DE-A1- 1 544 074
- JP-A- 2014 185 388
- KR-A- 20120 128 467
- US-A1- 2014 377 167

## Beschreibung

Die Erfindung betrifft eine Verfahren zum Trocknen und Reinigen von Wasserstoff enthaltenden Gasen, die bei der elektrolytischen Wasserspaltung mit elektrischem Strom in Form eines sauerstoffreichen Gases und eines wasserstoffreichen Gases anfallen, welche Reste des jeweils anderen Gases enthalten, bei dem das sauerstoffreiche Gas in die Atmosphäre oder an einen Verbraucher abgeführt, das wasserstoffreiche Gas in einem Erhitzer erwärmt, das erwärmte Gas in einem Reaktor einer exothermen Reaktion unterworfen wird, in der der Restsauerstoff mit dem Wasserstoff in ein heißes feuchtes Prozessgas umgesetzt wird, sodann das Wasser aus diesem Prozessgas unter Überdruck durch Adsorption des Wassers an einem Adsorptionsmittel in einem von mindestens zwei mit Adsorptionsmittel befüllte, durch Verbindungsleitungen und Schaltventilen verbundene Adsorber solange entfernt wird bis das Adsorptionsmittel im jeweiligen Adsorber mit Wasser beladen ist, wobei das getrocknete Prozessgas nach Verlassen des jeweiligen Adsorbers über einen Filter als hochreines Wasserstoff-Reingas in einer Reingasleitung zum Verbraucher abgeleitet und das unbehandelte Prozessgas zur Fortführung des Deladungsvorganges auf den unbeladenen Adsorber umgelenklsowie gleichzeitig das beladene Adsorptionsmittel des jeweiligen Adsorbers mit einer entgegen der Stromrichtung des in Beladung befindlichen Adsorbers in einer Regenerationsgasleitung zugeführten, durch einen Elektro-Heizkörper erhitzten Teilmenge an Reingas als Regenerationsgas regeneriert wird, wobei eine Steuereinheit die Adsorber in Abhängigkeit der Adsorptionsmittelbeladung in die Adsorptions- oder Regenerationsphase umschaltet und alle elektrischen Verbraucher aus der anliegenden elektrischen Stromversorgung über eine Stromleitung gespeist werden.

Die Erfindung betrifft ferner eine Vorrichtung zum Trocknen und Reinigen von Wasserstoff enthaltenden Gasen, die bei der elektrolytischen Wasserspaltung mit elektrischem Strom in Form eines sauerstoffreichen Gases und eines wasserstoffreichen Gases anfallen, welche Reste des jeweils anderen abgetrennten Gases enthalten, mit einer an die Einspeiseleitung angeschlossenen Stromleitung zur Versorgung aller Verbraucher der Vorrichtung mit Strom, einer Abführleitung für das sauerstoffreiche Gas in die Atmosphäre oder zum Verbraucher und einer Zuführleitung für das wasserstoffreiche Gas, mit einem Erhitzer zum Erwärmen des wasserstoffreichen Gases, einem Reaktor zur Umsetzung von Restsauerstoff und Wasserstoff unter Bildung von Wasser an einem Katalysator zu einem heißen feuchten Prozessgas, mindestens zwei mit Adsorptionsmittel befüllte Adsorber, die zueinander über Verbindungsleitungen und Schaltventile bei Überdruck in den Adsorptions- und Regenerationszustand und umgekehrt über eine Steuereinheit umschaltbar angeordnet sind und die zwei voneinander unabhängige Adsorptionskreise bilden, wobei die Adsorber mit dem Reaktor über eine Prozessgasleitung in Verbindung stehen, die das Prozessgas in die Adsorber zur Adsorption des Wassers leitet, und die Adsorber über einen Filter und eine kopfseitige, mit einem Schaltventil absperrbare Reingasleitung zur Ableitung des getrockneten Prozessgases als hochreines Wasserstoff-Reingas verbunden sind, und die Adsorber kopfseitig mit einer von der Reingasleitung nach dem Filter abzweigenden Regenerationsgasleitung zum Zuführen einer Teilmenge des Reingases als Regenerationsgas in einen Elektro-Heizkörper zum Aufheizen des Regenerationsgases und fußseitig mit einer Desorptionsgasleitung zum Ableiten des mit Wasser beladenen Desorptionsgases entgegen der Stromrichtung des Prozessgases des auf Adsorption geschalteten Adsorbers verbunden sind.

### Stand der Technik

Die Elektrolyse zur Wasserstofferzeugung, d.h. die Wasserspaltung, gehört seit langem zum Stand der Technik. Bei diesem Verfahren wird Wasser mit elektrischem Strom in einem Elektrolyseur in seine Bestandteile Sauerstoff und Wasserstoff zerlegt.
Das erzeugte Wasserstoffgas wird anschließend einer Reinigung, beispielweise einer elektrischen Reinigung durch eine zweite Elektrolyseeinheit (DE 10 2015 201 802 A1) oder durch Adsorption (DE 10 2016 208 889 B4) unterzogen.
Für die Herstellung des Wasserstoffgases wird zunehmend elektrischer Strom aus erneuerbarer Primärenergie wie Solarenergie, Wind- oder Wasserkraft herangezogen. Solarenergie und Windkraft stehen witterungsbedingt nicht unterbrechungsfrei zur Verfügung bzw. können nur dann in ausreichendem Maß für die Elektrolyse genutzt werden, wenn der regenerativ erzeugte Strom nicht von anderen Verbrauchern im Netz abgenommen wird.
Der Nachteil dieses Standes der Technik besteht darin, dass der Elektrolyseur zur Wasserstofferzeugung abgeschaltet werden muss. Dies hat zur Folge, dass die Regeneration des nicht im Adsorptionsbetrieb befindlichen Adsorbers ebenfalls abgebrochen werden muss, wodurch energetische Verluste entstehen. Darüber hinaus steht der nicht regenerierte Adsorber nach Wiederanschalten der Elektrolyse nicht für den adsorptiven Trocknungsprozess zur Verfügung und muss, sobald der regenerativ erzeugte Strom wieder zur Verfügung steht, zunächst regeneriert werden. In dieser Zeit kann der in der Elektrolyse erzeugte Wasserstoff nicht getrocknet werden. Die Elektrolyseanlage kann somit bis zum Ende der Regeneration des Adsorbers für mehrere Stunden nicht zur Wasserstofferzeugung genutzt werden.

Aus der DE 22 14 663 C2 ist eine Vorrichtung zur Adsorption von Wasserdampf aus feuchter Luft mit zwei, jeweils ein Molekularsieb enthaltenden Kammern bekannt, deren Zuleitungen und Ableitungen mit Ventilen zum intermittierenden Umsteuern der Kammern von Trocknung auf Regeneration und umgekehrt verbunden sind. Durch ein Gebläse wird ein Teilstrom der getrockneten Luft zur Regeneration des mit Wasser beladenen Adsorbers zurückgeführt.

Zum Stand der Technik gehört auch ein Verfahren zur Entfernung von Dampf aus einem zugeführten komprimierten Gas durch Einspeisen des Gases in eine mit Adsorbens für den Dampf gefüllte Kammer einer Anordnung von mindestens zwei Kammern, wobei jeweils die andere vorher zur Adsorption von Dampf aus dem Gas benutzt worden ist und nach einer gewissen Adsorptionszeit ein Vertauschen der Kammer stattfindel, um eine Reaktivierung der zuvor zur Adsorption benutzten Kammer und anschließenden Kühlung durch Frischluft vor erneuter Umschaltung vorzusehen, wobei während der Reaktionsperiode der jeweiligen Kammer durch ein im Druckbetrieb arbeitendes Gebläse ein heißer Gasstrom im Gegenstrom zur Adsorptionseinrichtung zugeführt wird (DE 37 20 915 C2). Am Ende der Reaktionsperiode wird ein Gebläse zum Saugbetrieb eingeschaltet und der Kühlstrom als Saugstrom durch die Kammer in die Adsorptionsrichtung geführt. Als Gasstrom für den Druck- und Saugbetrieb wird Umgebungsluft eingesetzt und die einzelnen Kreise zur Reaktivierung und Adsorption werden durch Umschaltorgane gebildet. Der Kreis zur Reaktivierung weist eine Gebläseanordnung für Saug- und Druckbetrieb auf, wobei während des Druckbetriebes zusätzlich ein Erhitzer eingeschaltet ist.

Weiterhin ist aus der DE 42 03 634 A1 ein Verfahren zur Trennung von organischen Bestandteilen aus Gasgemischen bekannt, bei dem das zu trennende primäre Gasgemisch auf eine Membrantrennstufe geführt wird, in der das zu trennende Gasgemisch in ein mit organischen Verbindungen angereichertes Permeat, das dem primären Gasgemisch erneut zugeführt wird, und in ein mit organischen Verbindungen abgereichertes Retentat getrennt wird. Aus dem Retentat werden nachfolgend über einen Adsorptionsvorgang die organischen Verbindungen entfernt und der derart gereinigte Retentatgasstrom an die Umgebung abgegeben, wobei wenigstens ein Teil des gereinigten Retentatgases als Regeneriergas zur vakuumbetriebenen Desorption auf die beladene Adsorbereinrichtung geleitet wird. Das mit organischen Verbindungen angereicherte Regenerierqas wird dem primären Gasgemisch zugeführt.

Des Weiteren ist aus der DE 10 2008 057 763 A1 eine Vorrichtung zum adsorptiven Trennen eines Gases mit mindestens einem Adsorptionsbehälter bekannt, der mit einem Adsorbens befüllt ist, sowie mit Zu- und Ableitungen, über die in einer Adsorptionsphase des Adsorptionsbehälters der zu trennende Gasstrom zum Trennen durch das Adsorbens geleitet wird und über die in einer Regenerationsphase des Adsorptionsbehälters ein Teil des getrennten Gasstroms zur Regeneration des Adsorbens durch dieses geleitet wird. Der zu trennende Gasstrom wird vor dem Trennen mindestens durch einen Führungskanal entlang des Adsorbens geführt, um dieses zu erwärmen.
Es handelt sich um die Trocknung von feuchter Druckluft. Die Abzweigung der getrockneten Druckluft erfolgt über ein Drosselelement.

Aus der DE 10 2012 112 040 B4 und der DE 10 2014 108 977 A1 sind Vorrichtungen zum Trocknen von Gasen, insbesondere zum Trocknen von Methan oder Erdgas bekannt, die einen Gaseinlass, einen Gasauslass, wenigstens zwei Adsorptionskammern zur Aufnahme von Trockenmittel, einen Kühler, der in Strömungsrichtung zwischen dem Gaseinlass und den Adsorptionskammern angeordnet ist, einen Kondensatauslass, der in Strömungsrichtung zwischen Gaseinlass und den Adsorptionskammern angeordnet ist, und einen Erhitzer aufweisen, wobei die Adsorptionskammern mit dem Gaseinlass und mit dem Gasauslass verbunden sind. Es ist ein Gebläse vorgesehen, das mit einer Ansaugleitung und einer Leitung zum Ansaugen von vorgekühltem und vorgetrocknetem Gas und einer Ansaugleitung und einer Leitung zum Ansaugen von trockenem Gas für die Regeneration verbunden ist.

Eine andere bekannte Lösung (DE 20 2010 017 546 U1) sieht eine Vorrichtung zur adsorptiven Trocknung von gereinigtem Biogas (Biomethan) mit einem Methangehalt von mindestens 90 Vol.-% und Regenerierung beladener Adsorptionsmittel, bestehend aus mindestens einem ersten Wärmetauscher zur Abkühlung und Reduzierung des Wassergehaltes im Biogas, vor. Die Vorrichtung besitzt mindestens zwei Adsorber, wobei abwechselnd der eine Adsorber zur Trocknung von Biogas und der andere Adsorber zur Regeneration schaltbar ist, wobei die Adsorber mit einer Leitung zur Zuführung von abgekühltem Biogas und einer Leitung zur Abführung von getrocknetem Biogas verbunden sind. In die das Biogas abführende Leitung ist eine absperrbare Abzweigleitung zur Auskreisung eines Teilstromes an getrocknetem Biogas eingebunden, die mit mindestens zwei Wärmetauschern verbunden ist, wobei der eine Wärmetauscher zur Erwärmung und der andere Wärmetauscher zur Kühlung des getrockneten Biogases bestimmt ist. Das erwärmte oder gekühlte Biogas ist über eine weitere Leitung dem zu regenerierenden Adsorber zuführbar.

Die EP 2 544 794 B1 schlägt ein Verfahren zur adsorptiven Trocknung von gereinigtem Biogas (Biomethan) und Regenerierung beladener Adsorptionsmittel unter Verwendung von mindestens zwei Adsorbern vor, die feste Adsorptionsmittel als lose Schüttung enthalten, die abwechselnd beladen und mittels eines erwärmten Gasstromes regeneriert werden. Die Trocknung und die Regeneration werden als geschlossener Biogas-Kreislauf geführt, wobei als Adsorptionsmittel getrennte Schichten auf Basis Silica-Gel und Molekularsiebe eingesetzt werden und das zu trocknende Biogas zuerst die Silicagelschicht durchströml. Zur Regenerierung wird ausschließlich erwärmtes getrocknetes Biomethan mit einer Temperatur von bis zu 150 °C eingesetzt, das nach dem Kontakt mit Adsorptionsmittel wieder in den Ausgangsstrom an gereinigtem Biomethan zurückgeführt wird und nach erfolgter Regenerierung gekühltes, getrocknetes Biomethan mit dem Adsorptionsmittel in Kontakt gebracht wird, das anschließend wieder in den Ausgangsstrom an gereinigtem Biogas geführt wird, wobei während der Trocknung und Regenerierung anfallendes methanreiches Wasser wieder der Biogaserzeugung und/oder -reinigung zugeführt wird.

Außerdem ist aus der EP 2 628 520 A1 ein Verfahren zur Entfernung einer Komponente aus einem Ausgangsgas, beispielsweise Luft, mittels Adsorption bekannt, bei dem das Ausgangsgas über mindestens eine von mindestens zwei jeweils ein Adsorptionsmittel enthaltenden Kammern geführt wird, wobei mindestens eine der Kammern im Anschluss an einen in dieser Kammer durchgeführten Adsorptionsprozess reaktiviert wird. Zur Reaktivierung wird zunächst ein Desorptionsgas zur Regenerierung des darin enthaltenen Adsorptionsmittels durch die entsprechende Kammer und anschließend ein Kühlgas durch diese Kammer geführt, wobei der Desorptionsgasdurchfluss in gleicher Richtung zur Strömungsrichtung im Adsorptionsprozess erfolgt und der Desorptionsgasdurchfluss sowie Kühlgasdurchfluss mittels einer wechselstrombetriebenen Verdichtereinheit bewirkt werden. Die Leistung der Verdichtereinheit wird zumindest bei einem der Gasdurchflüsse über die Frequenz des Wechselstroms gesteuert und das Desorptionsgas vor Eintritt in die zugehörige Kammer mittels einer Heizeinrichtung erwärmt und die in Stromrichtung hinter der Heizeinrichtung gemessene Temperatur des Desorptionsgases über den Volumenstrom des Desorptionsgases gorogolt, wobei die an der Verdichlereinheit anliegende Wechselstromfrequenz als Stellgröße verwendet wird.

Alle diese bekannten Lösungen können bei Fortfall der Elektroenergieversorgung den Nachteil eines abrupten Abbruches der Folgeprozesse nicht beseitigen.

### Aufgabenstellung

Bei diesem Stand der Technik liegt der Erfindung die Aufgabe zugrunde, den Gasfluss des in der Vorrichtung befindlichen Gases bei Abschaltung der Elektrolyse infolge Wegfalls der Elektroenergieversorgung oder eines Black-Outs durch eine interne/externe Stromquelle solange aufrechtzuerhalten bis die Regeneration des mit Wasser beladenen Adsorbers ordnungsgemäß abgeschlossen ist und gleichzeitig die Wirtschaftlichkeit der Trocknung und Reinigung von Wasserstoff enthaltenden Gasen durch die Reduzierung von Gasverlusten und Emissionen mittels der Rückführung einer Teilmenge des Reingases als Desorptionsgas in das Prozessgas zu verbessern.

Diese Aufgabe wird durch ein Verfahren mit den Merkmalen des Anspruchs 1 und eine Vorrichtung mit den Merkmalen des Anspruchs 13 gelöst.

Vorteilhafte Ausgestaltungen des erfindungsgemäßen Verfahrens und der erfindungsgemäßen Vorrichtung sind den Unteransprüchen entnehmbar.

Die Lösung der Aufgabe wird dadurch erreicht, dass die Teilmenge des Reingases durch ein an die Regenerationsgasleitung angeschlossenen Gas-Booster mit Frequenzumrichter als Regenerationsgas angesaugt wird und ein Durchflusstransmitter mit integriertem Durchflussrechner den Volumendurchfluss der Teilmenge durch Ermitteln eines aktuellen Drehzahlwertes des Gas-Boosters oder eines Drehzahlwertes des Gas-Boosters als Festwert über die Steuereinheit einstellt, die bei Fortfall der Stromversorgung alle stromverbrauchenden Aggregate, wie Gas-Booster, Elektro-Heizkörper, Steuereinheit, Schaltventile und ggf. Pumpe, auf eine interne/externe Stromquelle zur temporären Elektroenergieversorgung über die Stromleitung mit einer Schalteinrichtung umschaltet, wobei der Gas-Booster einen Kreislauf-Saugstrom des an den Adsorbern aus dem bei Abschaltung der Stromversorgung in der Vorrichtung vorhandenen Restgas gebildeten Rein- und Desorptionsgases auf einem durch die Gasleitungen, die Adsorber, den Elektro-Heizkörper, Wärmetauscher, Abscheider und Filter führenden Strömungsweg bis zum ordnungsgemäßen Abschluss der Regeneration aufrechterhält.

Nach einer vorteilhaften Ausführungsform des erfindungsgemäßen Verfahrens wird als Gas-Booster eine trockenlaufende, hermetisch dichte Peripheralradpumpe mit magnetgekuppeltem Antrieb, ein trockenlaufender Drehschieber-Verdichter oder ein Drehkolben-Verdichter verwendet. Dies stellt sicher, dass der Wasserstoff trotz seiner hohen Diffusionsgeschwindigkeit und kleinen Molekülgröße nicht aus dem Arbeitsraum entweichen kann und auch eine Verunreinigung des Wasserstoffs durch öl vermieden wird. Anstelle der Peripheralradpumpe kann auch ein trockenlaufender Drehschieiberverdichler oder ein Drehkolbonverdlchler eingeselzl werden, wenn größere Volumendurchflüsse, beispielsweise Volumendurchflüsse über 10.000 m³/h, zur Anwendung kommen.

Gemäß einer weiteren bevorzugten Ausgestaltung des erfindungsgemäßen Verfahrens wird als Durchflusstransmitter ein Wirbelstrommesser mit integriertem Durchflussrechner verwendet, wobei der Volumendurchfluss an Regenerationsgas durch den Durchflusstransmitter gemessen und aus dem gemessenen Volumendurchfluss mit dem in den Durchflusstransmitter integrierten Durchflussrechner ein aktueller Drehzahlwert des Gas-Boosters als Ist-Wert ermittelt, der an die Steuereinheit weitergegeben wird, welche diesen Wert als Steuergröße dem Frequenzumrichter des Gas-Boosters vorgibt.
Ebenso kann auch ein Schwebekörpermesser eingesetzt werden, ohne die Erfindung zu verlassen.

Die besondere Bedeutung des erfindungsgemäßen Verfahrens besteht darin, dass als interne/externe Stromquelle eine Brennstoffzellen-Einheit und/oder USV-Quelle und/oder ein Notstromaggregat und/oder ein Festnetzanschluss verwendet werden kann. Die Brennstoffzellen-Einheit wird zweckmäßigerweise bis zum Abschluss der Regeneration mit zuvor erzeugtem, in einem Puffer gespeicherten Wasserstoff-Reingas betrieben, kann aber auch mit Wasserstoff aus einem externen separaten Wasserstoff-Speicher gespeist werden.

In einer weiteren vorteilhaften Ausgestaltung des erfindungsgemäßen Verfahrens wird die Temperatur des Regenerationsgases in Abhängigkeit einer von einem Temperatursensor in der Regenerationsgasleitung in Stromrichtung hinter dem Gas-Booster gemessenen Ist-Temperator durch ein mit der Steuereinheit kommunizierenden, im Elektro-Heizkörper angeordneten elektronischen Schaltkreis auf eine der Desorptionstemperatur entsprechende Soll-Temperatur eingeregelt.

Eine weitere Ausbildung des erfindungsgemäßen Verfahrens sieht vor, dass der Durchflusstransmitter die Anwesenheit oder das Fehlen des Regenerationsgases detektiert und der Durchflussrechner diese Information in einen Schaltbefehl zum Zu- oder Abschalten des Elektro-Heizkörpers umsetzt.

In einer weiteren Ausführungsform des erfindungsgemäßen Verfahrens wird das Prozessgas/ Desorptionsgas in einem dem Reaktor nachgeschalteten Wärmetauscher gekühlt und das beim Kühlen auskondensierte Wasser in einem Abscheider abgeschieden, mit einer Pumpe ausgeschleust oder im Abscheider zwischengespeichert.

Eine weitere Ausgestaltungsform des erfindungsgemäßen Verfahrens zeichnet sich dadurch aus, dass der Strömungsweg durch Absperren der Reingasleitung mit dem Schaltventil zum Verbraucher hin und Offenhalten der Prozessgasleitung, der Reingasleitung in die Regenerationsgasleitung über den Elektro-Heizkörper, des durch die Schaltventile über die Verbindungsleitungen auf Adsorption geschalteten Adsorbers, des durch die Schaltventile über die Verbindungsleitungen auf Regeneration geschalteten Adsorbers und der in die Prozessgasleitung zurückführenden Desorptionsgasleitung gebildet wird, so dass ein innerer, in sich geschlossener Umlaufweg für das bei Fortfall der elektrischen Stromversorgung in der Vorrichtung verbliebene Gas entsteht.

Nach einer weiteren Ausbildung des erfindungsgemäßen Verfahrens umfasst der Saugstrom-Kreislauf folgende Schritte:
I Einschalten der Stromversorgung durch die interne/ externe Stromquelle, beispielsweise einer Brennstoffzellen-Einheit, und Weiterbetrieb der elektrischen Verbraucher, wie Gas-Booster, Elektro-Heizkörper, Pumpe, Schaltventile und Steuereinheit,
II Absperren der Reingasleitung zum Verbraucher hin durch Schließen des Schaltventils und Bilden des Strömungswegs,
III Weiterführen der Trocknung/Regeneration durch Fördern des von den Adsorbern aus dem verbliebenen Restgas erzeugten Rein- und Desorptionsgases mit dem Gas-Booster im Saugstrom-Kreislauf durch den Strömungsweg, wobei das die Adsorber verlassende Rein-/Desorptionsgas im Kreislauf umgewälzt wird bis die Regeneration abgeschlossen ist,
IV Abzweigen der Teilmenge des Reingases aus der Reingasleitung als Regenerationsgas und Einstellen dieser Teilmenge durch Messen ihres Volumendurchflusses, Ermitteln eines aktuellen Drehzahlwertes des Gas-Boosters als Ist-Wert oder einen Drehzahlwert als Fest-Wert aus dem gemessenen Volumendurchfluss mit dem im Durchflusstransmitter integrierten Durchflussrechner, Übermitteln des ermittelten Wertes an die Steuereinheit, die diesen Wert als Steuergröße dem Frequenzumrichter des Gas-Boosters in Abhängigkeit der Beladung des Adsorptionsmittels vorgibt,
V Aufheizen des abgezweigten Regenerationsgases gemäß Schritt IV durch Einregeln der Temperatur auf eine der Desorptionstemperatur entsprechenden, von dem elektronischen Schaltkreis im Elektro-Heizkörper über die Steuereinheit vorgegebenen Soll- Temperatur in Abhängigkeit der von dem Temperatursensor in Stromrichtung hinter dem Elektro-Heizkörper gemessenen Ist-Temperatur,
VI Rückführen des den auf Regeneration geschalteten Adsorber verlassenden Desorptionsgases über die Desorptionsgasleitung in Stromrichtung vor dem Kühler in die Prozessgasleitung,
VII Kühlen des Desorptionsgases im Kühler, Abscheiden des auskondensierten Wassers und Abpumpen des Wassers in die Förderleitung zum Elektrolyseur oder in einen separaten Speicher oder Zwischenspeichern des Wassers im Abscheider mit nachfolgendem Abführen des Wassers,
VIII Zuführen der den Abscheider verlassenden Menge an Desorptionsgas zur Adsorption des noch vorhandenen Wassers in den auf Adsorption geschalteten Adsorber, zuführen des getrockneten Gases als Reingas über den Filter zum Gas-Booster zwecks erneutem Entnehmen der Teilmenge an Reingas als Regenerationsgas,
IX Fortführen der Schritte I bis VIII bis die Regeneration abgeschlossen ist.

Die Lösung der Aufgabe wird mit der erfindungsgemäßen Vorrichtung dadurch erreicht, dass an die Regenerationsgasleitung ein Gas-Booster mit Frequenzumrichter zum Ansaugen und Verdichten der Teilmenge des Reingases und ein Durchflusstransmitter mit integriertem Durchflussrechner zum Ermitteln eines aktuellen Drehzahlwertes des Gas-Boosters als Ist-Wert oder eines Drehzahlwertes als Festwert für den Volumendurchfluss an Regenerationsgas und hinter dem Gas-Booster der Elektro-Heizkörper als Regenerationsgaserhitzer angeschlossen ist, wobei in Stromrichtung hinter dem Elektro-Heizkörper ein Temperatursensor zum Messen der Ist-Temperatur des Regenerationsgases und im Elektro-Heizkörper ein Schaltkreis zum Messen der Soll-Temperatur angeordnet ist, und dass der Durchflusstransmitter mit dem Frequenzumrichter und der Schaltkreis mit der Steuereinheit in Verbindung stehen, die bei Fortfall der Stromversorgung ein Umschalten aller stromverbrauchenden Aggregate, wie Gas-Booster, Elektro-Heizkörper, Steuereinheit, Schaltventile und ggf. Pumpe, auf eine interne/externe Stromquelle zur temporären Elektroenergieversorgung über die Stromleitung durch eine Schalteinrichtung auslöst, wobei der Gas-Booster einen Saugstrom-Kreislauf des aus bei Abschaltung der Stromversorgung vorhandenen, aus dem Restgas an den Adsorbern gebildeten Rein- und Desorptionsgases auf einem durch die Gasleitungen, die Adsorber, den Elektro-Heizkörper, den Wärmetauscher, Abscheider und Filter führenden Strömungsweg bis zum ordnungsgemäßen Abschluss der Regeneration erzeugt.

Die weitere Ausgestaltung der erfindungsgemäßen Vorrichtung sieht vor, dass der Gas-Booster eine trockenlaufende, hermetisch dichte Peripheralradpumpe mit magnetgekuppeltem Antrieb, ein trockenlaufender Drehschieber-Verdichter oder ein Drehkolben-Verdichter ist. Dies gewährleistet, dass der Wasserstoff trotz seiner hohen Diffusionsgeschwindigkeit und kleinen Molekülgröße nicht aus dem Arbeitsraum entweichen kann und auch eine Verunreinigung des Wasserstoffs durch öl vermieden wird.

Nach einer weiteren vorteilhaften Ausgestaltung der erfindungsgemäßen Vorrichtung ist der Durchflusstransmitter ein Wirbelstrommesser mit integriertem Durchflussrechner oder ein Schwebekörpermesser.

In einer weiteren erfindungsgemäßen Ausgestaltung der erfindungsgemäßen Vorrichtung ist die interne Stromquelle eine Brennstoffzellen-Einheit und/oder eine USV-Quelle. Die Stromquelle kann, ohne die Erfindung zu verlassen, auch ein externes Notstromaggregat sein, das in der Lage ist, die Stromversorgung für die Zeitdauer bis zum Abschluss der Regeneration aufrechtzuerhalten. Ebenso kann als externe Stromquelle auch ein Festnetzanschluss dienen, sofern ein solcher zur Verfügung steht.

In einer weiteren vorteilhaften Ausführungsform der Erfindung ist ein Puffer zur Speicherung des zuvor erzeugten Reingases vorgesehen, der einerseits über eine durch ein Schaltventil in die Offen- oder Schließlage bringende Abzweigleitung mit der Reingasleitung verbunden ist und andererseits mit der Brennotoffzellen-Einheil über eine durch ein Schaltventil öffnende oder schließende Zuführleitung zum Zuführen des Reingases in die Brennstoffzellen-Einheit in Verbindung steht.
Zur Erfindung gehört aber auch, wenn ein separater Wasserstoff-Speicher vorgesehen ist, der mit der Brennstoffzellen-Einheit über die durch das Schaltventil in die Offen- oder Schließlage bringende Zuführleitung zum Zuführen von Wasserstoff in die Brennstoffzellen-Einheit in Verbindung steht.

Die weitere Ausgestaltung der erfindungsgemäßen Vorrichtung sieht vor, dass die Brennstoffzellen-Einheit ein internes Steuerglied aufweist, das mit der Steuereinheit und mit der Schalteinrichtung verbunden ist, die auf Veranlassung der Steuereinheit die Brennstoffzellen-Einheit zu- oder abschaltet.

Zweckmäßigerweise sind die Wechselstrom verbrauchenden Aggregate der erfindungsgemäßen Vorrichtung, vorzugsweise der Gas-Booster und die Pumpe elektrisch über einen Wechselrichter mit der Brennstoffzellen-Einheit verbunden. Die Schaltventile und die Steuereinheit können je nach Erfordernis ebenso an den Wechselrichter angeschlossen sein oder von dem durch von der Brennstoffzellen-Einheit gelieferten Gleichstrom versorgt werden. Ohne die Erfindung zu verlassen, kann aber auch eine USV-Quelle oder eine Notstromversorgung die Stromversorgung der Aggregate übernehmen. Ebenso ist es möglich, die Stromversorgung der Aggregate durch einen Festnetzanschluss zu gewährleisten.
Es versteht sich, dass sofern eine USV-Quelle als Stromquelle eingesetzt wird, ein Wechselrichter vorgesehen ist.

Gemäß einem weiteren Merkmal der Erfindung fungiert der Durchflussrechner des Durchflusstransmitters für den Elektro-Heizkörper als Schaltorgan, das bei einem Fehlen des Regenerationsgasdurchflusses den Elektro-Heizkörper abschaltet bzw. das Einschalten verhindert.

In einer besonders vorteilhaften Ausgestaltung der erfindungsgemäßen Vorrichtung sind ein Wärmetauscher zum Kühlen des Prozessgases bzw. Desorptionsgases und ein Abscheider zum Abscheiden des auskondensierten Wassers hintereinander in Stromrichtung des Prozessgases angeordnet, wobei der Abscheider über eine Pumpe zum Fördern des auskondensierten Wassers an eine in den Elektrolyseur mündende Förderleitung angeschlossen ist bzw. der Abscheider im Fall des Stromausfalls das auskondensierte Wasser bis zum Abschluss der Regeneration zwischenspeichert.

Von besonderem Vorteil ist auch, dass die Desorptionsgasleitung in Stromrichtung des Prozessgases nach dem Reaktor in die Prozessgasleitung eingebunden ist, sodass die Prozessgasleitung über den Wärmetauscher, den Abscheider und den durch die Schaltventile auf Adsorption geschalteten Adsorber, die Reingasleitung, die Regenerationsgasleitung über den mit den Schaltventilen auf Regeneration geschalteten Adsorber mit der Desorptionsgasleitung einen gegenüber der Reingasleitung geöffneten inneren Strömungsweg für das bei Abschaltung des Stromes in der Vorrichtung befindliche Restgas in Form des wasserstoffreichen Gases, des Prozess-, Rein-, Regenerations- und Desorptionsgases bilden kann. Durch die Rückführung der Teilmenge an Reingas als Regenerationsgas in das Prozessgas entstehen keine Gasverluste und Emissionen, wodurch die Umweltvertraglichkeit und Wirtschaftlichkeit der erfindungsgemäßen Vorrichtung verbessert werden.
Weiterhin ist erfindungsgemäß vorgesehen, dass in die Zuführleitung für die Brennstoffzellen-Einheit ein Schaltventil eingebunden ist, welches im Falle der Abschaltung der Elektroenergieversorgung von der Steuereinheit den Stellbefehl zum Zuschalten der internen/externen Stromquelle und bei Zuschaltung der Elektroenergieversorgung den Stellbefehl zum Abschalten der internen/externen Stromquelle über die Schalteinrichtung erhalt.
Bei Wegfall der Elektroenergieversorgung kann der Betrieb der Regeneration bis zu ihrem Abschluss weitergeführt werden, weil der Gas-Booster, der Elektro-Heizkörper, die Pumpe, die Schaltventile und die Steuereinheit wegen ihres verhältnismäßig geringen Verbrauches an Elektroenergie über die Brennstoffzellen-Einheit oder eine USV-Quelle mit Strom versorgt werden können.
Der Gas-Booster befördert dabei das vorhandene Gas im Saugstrom aus der Reingasleitung auf einem aus der Prozessgasleitung über den durch Schaltventile auf Adsorption geschalteten Adsorber, der Reingasleitung, der Regenerationsgasleitung über den durch Schaltventile auf Regeneration geschalteten Adsorber und der in die Prozessgasleitung einbindenden Desorptionsgasleitung gebildeten inneren Strömungsweg bis die Regeneration abgeschlossen ist.

In weiterer vorteilhafter Ausgestaltung der erfindungsgemäßen Vorrichtung kann die Stromleitung für die Stromversorgung des Gas-Boosters, des Elektro-Heizkörpers, der Pumpe, Schaltventile und Steuereinheit mit der Brennstoffzellen-Einheit oder der USV-Quelle je nach Erfordernis von der internen/externen Stromquelle über die Schalteinrichtung zu- oder abgeschaltet werden.

Nach einer vorzugsweisen Ausführungsform der Erfindung sind die Adsorber mit Silica-Gel, Molekular-Sieben oder Aluminiumoxid-Gel als Adsorptionsmittel für Wasser befüllt.

Weitere Vorteile und Einzelheiten ergeben sich aus der nachfolgenden Beschreibung unter Bezugnahme auf die beigefügten Zeichnungen.

### Ausführungsbeispiel

Die Erfindung soll nachstehend an einem Ausführungsbeispiel näher erläutert werden.

Es zeigen
Fig. 1 eine schematische Darstellung des Aufbaus der erfindungsgemäßen Vorrichtung mit einem Gas-Booster und einem Elektro-Heizkörper zum Aufheizen des Regenerationsgases bei regenerativer Stromversorgung,
Fig. 2 eine schematische Ansicht der erfindungsgemäßen Vorrichtung bei Betrieb der elektrolytischen Wasserspaltung mit Darstellung des Durchflusses beim Adsorbieren und Regenerieren und
Fig. 3 eine schematische Darstellung der Regeneration im Saugstrom-Kreislauf des in der Vorrlchlung verbliebenen Restgases bei abgeschalteter Wasserspaltung.

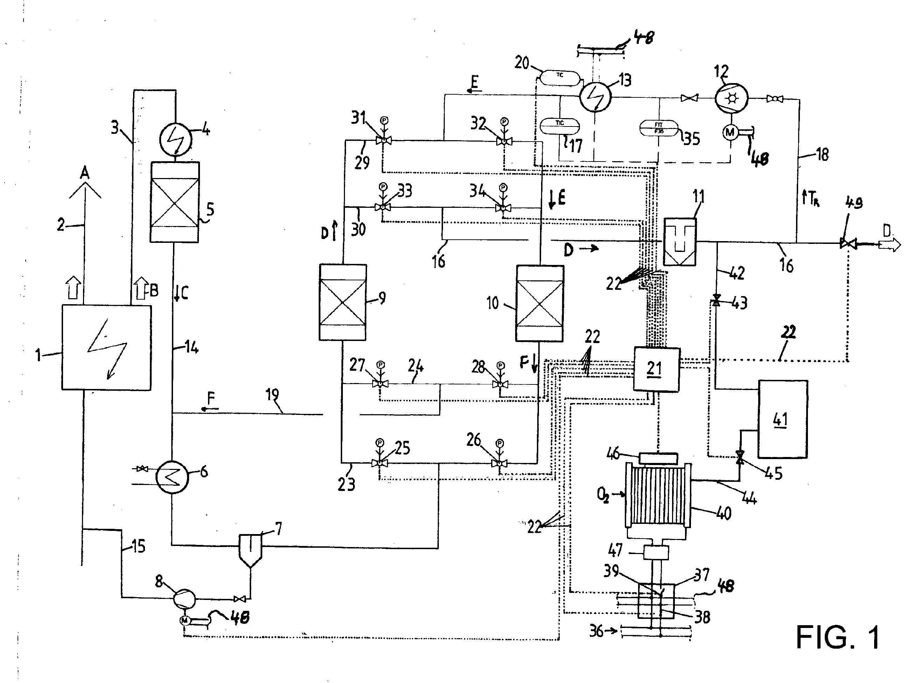

Die Fig. 1 zeigt den grundsätzlichen Aufbau der erfindungsgemäßen Vorrichtung.
In einem mit elektrischem Strom aus regenerativer Sonnenenergie und/oder Windkraft versorgten Elektrolyseur 1 wird Wasser in ein sauerstoffreiches Gas A und in ein wasserstoffreiches Gas B elektrolytisch zerlegt. Das sauerstoffreiche Gas A enthält als Hauptbestandteil Sauerstoff, Reste von Wasserstoff und Wasser, das wasserstoffreiche Gas B Reste von Sauerstoff und Wasser. Derartige Elektrolyseure verbrauchen erhebliche Mengen an Elektroenergie, die beispielsweise im zwei- bis dreistelligen MW-Bereich liegen. Die fluktuierende Natur der regenerativen Stromquellen bedingt, dass der Elektrolyseur 1 nicht kontinuierlich mit Strom versorgt werden kann und bei Wegfall der regenerativen Stromversorgung abgeschaltet werden muss, wenn nicht andere Stromquellen zur Verfügung stehen. Die nachfolgende Trocknung und Reinigung des wasserstoffreichen Gases B ist damit ebenso betroffen.
Das erzeugte sauerstoffreiche Gas A gelangt durch eine Abführleitung 2 in die Atmosphäre oder zu einem nicht weiter beschriebenen Verbraucher und das wasserstoffreiche Gas B über die Zuführleitung 3 in die erfindungsgemäße Vorrichtung. Im Wesentlichen umfasst die erfindungsgemäße Vorrichtung einen Erhitzer 4 zum Vorwärmen des wasserstoffreichen Gases B, einen Reaktor 5 für die katalytische exotherme Reaktion zwischen Wasserstoff und Sauerstoff zu einem wasserhaltigen heißen Prozessgas C, einen Flüssig-Gas-Wärmetauscher 6 zum Kühlen des Prozessgases C mit Wasser, einen Abscheider 7 zum Abscheiden des bei der Kühlung, auskondensierten Wassers, eine Pumpe 8 zum Ausschleusen des abgeschiedenen Wassers in die Förderleitung 15 des Elektrolyseur 1, mindestens zwei parallel geschaltete, mit Adsorptionsmittel gefüllte Adsorber 9 und 10, einen Filter 11 für das die Adsorber 9 oder 10 verlassende getrocknete Reingas D, einen Gas-Booster 12 zum Entnehmen einer Teilmenge T_{R} aus dem Reingas D als Regenerationsgas E, einen Elektro-Heizkörper 13 und eine interne Stromquelle, beispielsweise in Form einer Brennstoffzellen-Einheit 40 zum Aufheizen des Regenerationsgases E auf Desorptionstemperatur.
Diese Baueinheiten bzw. Baugruppen sind durch Leitungen und Ventile, die im Folgenden näher beschrieben werden, verbunden. Eine Steuereinheit 21 steuert die Ventile und somit das Umschalten der Adsorber in den Adsorptions- oder Regenerationszustand und umgekehrt, das Entnehmen der Teilmenge T_{R} an Reingas D als Regenerationsgas E und die Zuoder Abschaltung der Brennstoffzellen-Einheit 40 an.

Das wasserstoffreiche Gas B gelangt über eine Zuführleitung 3 in den Erhitzer 4, in dem es beispielsweise um 10 bis 20 °C aufgeheizt wird, um eine Blockierung des Katalysators im Reaktor 5 zu vermeiden, in dem das wasserstoffreiche Gas B mit dem enthaltenen Restsauerstoff durch eine exotherme Reaktion in heißes Prozessgas C und Wasser umgewandelt wird.

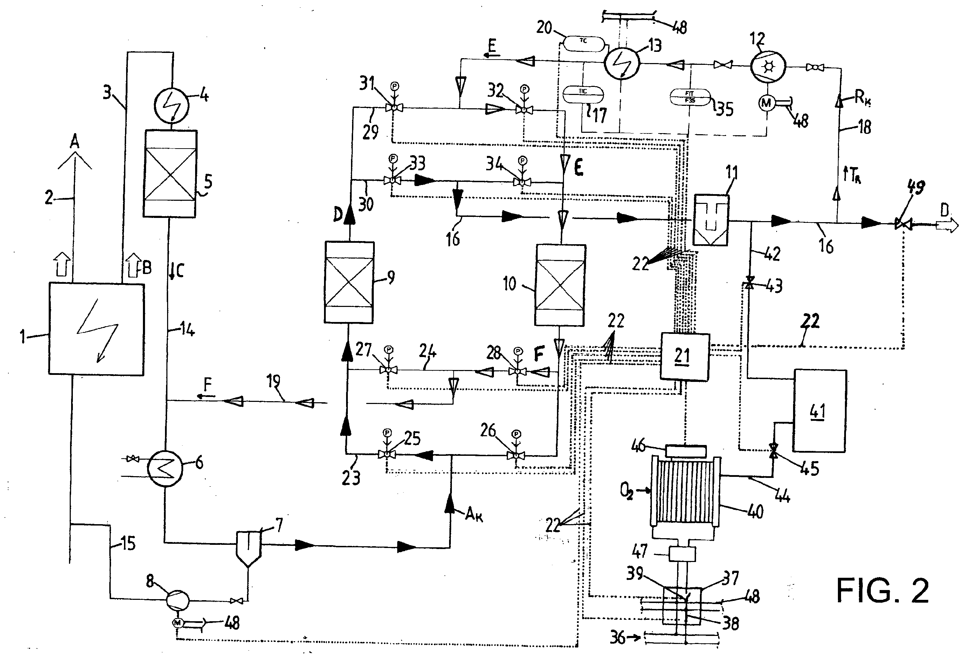

Die Prozessgasleitung 14 führt in Stromrichtung des Prozessgases C in den Flüssig-Gas-Wärmetauscher (Kühler) 6, mit welchem das heiße Prozessgas C auf etwa 10 °C bis 30 °C abgekühlt wird. Mit dem in Stromrichtung dem Kühler 6 nachgeordneten Abscheider 7 wird das auskondensierte Wasser ausgeschleust und von der Pumpe 8 über eine Förderleitung 15 in die Wasserzuleitung für den Elektrolyseur 1 oder in einen separaten Speicher zurückbefördert oder im Abscheider 7 zwischengespeichert.
Das gekühlte Prozessgas C gelangt - wie aus der Fig. 2 ersichtlich - sodann fußseitig in den auf Adsorption geschalteten Adsorber 9, in dem das Prozessgas C am Adsorptionsmittel getrocknet wird. Das getrocknete Prozessgas C verlässt als Reingas D kopfseitig den Adsorber 9 und wird durch die geöffnete Reingasleitung 16 über den Filter 11 zum Verbraucher abgeführt.
Die Regenerationsgasleitung 18 führt kopfseitig in den Adsorber 10, so dass das aufgeheizte Regenerationsgas E das Adsorptionsmittel im Adsorber 10 im Gegenstrom zur Stromrichtung der Adsorption im Adsorber 9 durchströmt und den Adsorber 10 fußseitig durch die Desorptionsgasleitung 19 als Desorptionsgas F verlässt. Die Desorptionsgasleitung 19 mündet in Stromrichtung des Prozessgases C nach dem Reaktor 5 aber vor dem Flüssig-Gas-Wärmetauscher 6 in die Prozessgasleitung 14 ein.
Als Adsorptionsmittel kommen Silica-Gel, Molekularsiebe oder Aluminiumoxid-Gel zum Einsatz.

Es wird jetzt auf die Schaltung der Adsorber 9 und 10 Bezug genommen.
In Fig. 2 befindet sich der Adsorber 9 in der Adsorptionsphase und der Adsorber 10 in der Regenerationsphase.
Die zum Adsorber 9 fußseitig einmündende Prozessgasleitung 14 und die vom Adsorber 10 fußseitig kommende Desorptionsgasleitung 19 sind untereinander durch zwei parallel angeordnete Verbindungsleitungen 23 und 24 vermascht und jede der Leitungen 23 und 24 ist mit zwei druckgesleuerlen Schaltventilen 25, 26 bzw. 27, 28 in Offenstellung oder Schließstellung bringbar, so dass die Adsorber 9 und 10 wechselseitig von der Adsorptionsphase in die Regenerationsphase und umgekehrt umgeschaltet werden können. Die kopfseitig vom Adsorber 9 abgehende Reingasleitung 16 und die kopfseitig in den Adsorber 10 führende Regenerationsgasleitung 18 sind ebenso durch zwei parallel angeordnete Verbindungsleitungen 29 bzw. 30 vermascht und jede der Leitungen 29 und 30 können mit zwei druckgesteuerten Schaltventilen 31, 32 bzw. 33, 34 geöffnet und geschlossen werden.
Die Schaltventile 25, 26, 27, 28 und die Schaltventile 31, 32, 33, 34 sind über die Steuerleitung 22 mit der Steuereinheit 21 verbunden, die die Schaltventile 25 bis 28 bzw. 31 bis 34 in Abhängigkeit des Adsorptions- und Regenerationsprozesses ansteuert.
Für den Fall, dass der Adsorber 9 im Adsorptionszustand und der Adsorber 10 im Regenerationszustand ist, befindet sich das fußseitige Schaltventil 25 und das kopfseitige Schaltventil 33 des Adsorbers 9 in offenstellung, die fußseitigen Schaltventile 26 und 27 sowie die kopfseitigen Schaltventile 31 und 34 des Adsorbers 9 in Schließstellung, während das kopfseitige Schaltventil 32 und das fußseitige Schaltventil 28 des Adsorbers geöffnet ist.

In Fig. 2 ist die Durchflussrichtung der Gase A, B, C, D, E und F durch Pfeile kenntlich gemacht.
Die Teilmenge T_{R} an Reingas D wird als Regenerationsgas E durch den Gas-Booster 12 mit Frequenzumrichter angesaugt und ein Durchflusstransmitter 35 mit integriertem Durchflussrechner ermittelt einen aktuellen Drehzahlwert als Ist-Wert oder ein Drehzahlwert als Festwert für den Volumendurchfluss. Diese Werte werden als Stellgröße an die Steuereinheit 21 zur Einstellung der Drehzahlen des Gas-Boosters weitergeleitet. Das Regenerationsgas E wird in einen dem Gas-Booster 12 nachgeordneten Elektro-Heizkörper 13 durch Einregeln der Temperatur des Regenerationsgases auf eine der Desorptionstemperatur entsprechende, von einem elektronischen Schaltkreis 20 im Elektro-Heizkörper 13 über die Steuereinheit 21 vorgegebene Soll-Temperatur in Abhängigkeit einer von einem Temperatursensor 17 in Stromrichtung hinter dem Elektro-Heizkörper 13 gemessenen Ist-Temperatur erhitzt. Der Elektro-Heizkörper 13 ist in die Regenerationsgasleitung 18 als Rohr eingebunden, durch das die Teilmenge T_{R} des Regenerationsgases E zum Aufheizen entlang nicht weiter gezeigter Heizstäbe strömt und kopfseitig in den auf Regeneration geschalteten Adsorber 10 geführt wird. Mit dem im Elektro-Heizkörper 13 angeordneten elektronischen Schaltkreis 20 wird das Fehlen eines Durchflusses an Regenerationsgas E detektiert und über die Steuerleitung 22 an die Steuereinheit 21 weitergeleitet, die das Ab- oder Zuschalten des Elektro-Heizkörpers 13 veranlasst.
Der Gas-Booster 12, der in Stromrichtung der Teilmenge T_{R} des Reingases D als Regenerationsgas E in der Regenerationsgasleitung 18 vorgesehen ist, entnimmt bzw. saugt die Teilmenge T_{R} an Reingas D als Regenerationsgas E an und fördert die Teilmenge T_{R} des Regenerationsgases E durch die Regenerationsgasleitung 18 über den Elektro-Heizkörper 13 kopfseitig in den jeweilig auf Regeneration geschalteten Adsorber 9 oder 10, wobei die Teilmenge T_{R} des Regenerationsgases E auf Desorptionstemperatur aufgeheizt wird.
Der Gas-Booster 12 ist eine trockenlaufende, also ölfreie, hermetisch dichte Peripheralpumpe mit magnetgekuppeltem Motor mit Frequenzumrichter.
Anstelle des Gas-Boosters 12 ist auch ein trockenlaufender Drehschieber-Verdichter oder ein Drehkolbenverdichter geeignet. Als Durchflusstransmitter 35 haben sich Wirbelstrommesser oder Schwebekörpermesser als geeignet erwiesen.

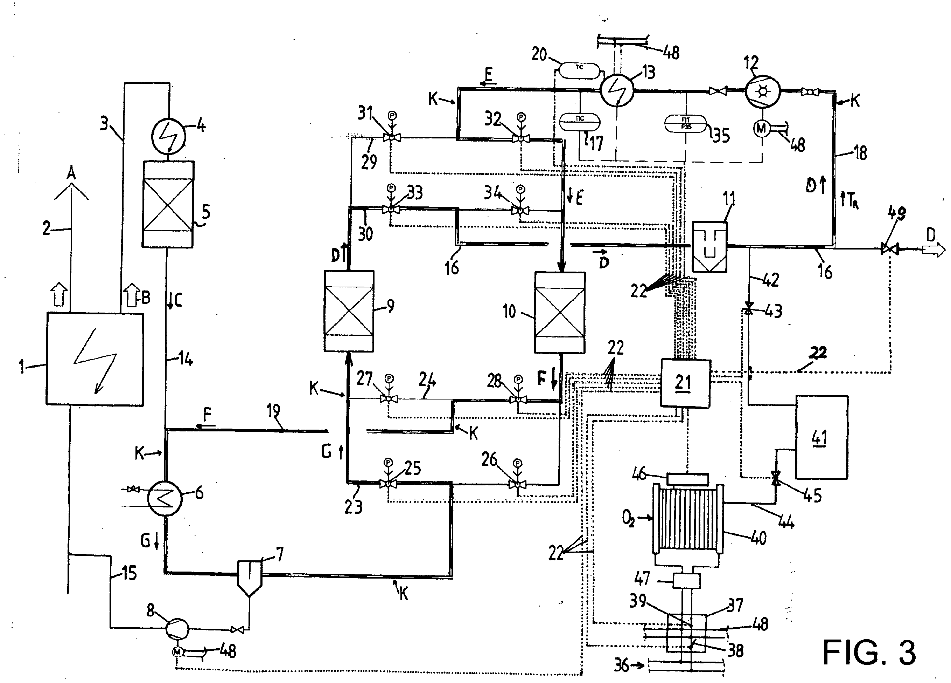

Die Fig. 3 zeigt die Darstellung des Weiterbetriebs der Regeneration bei Wegfall der regenerativen Stromversorgung.
In die Einspeiseleitung 36 für die regenerative Stromversorgung ist eine elektronische Schalteinrichtung 37 integriert, die einen Schalter 38 zum Ab- und Zuschalten der regenerativen Stromversorgung und einem Schalter 39 zum Zu- und Abschalten der interne Stromquelle 40, beispielsweise einer Brennstoffzellen-Einheit 40, umfasst. Die elektronische Schalteinrichtung 37 detektiert den Wegfall oder das erneute Zuschalten der regenerativen Stromversorgung und gibt diese Information über die Steuerleitung 22 an die Steuereinheit 21 weiter, die ihrerseits den entsprechenden Schaltvorgang an den Schaltern 38 bzw. 39 zum Zu- oder Abschalten der internen Stromquelle 40 auslöst und die Verbindung zu der Stromleitung 48 der Verbraucher sicherstellt.
Als interne Stromquelle kommt beispielsweise eine Brennstoffzellen-Einheit 40 zum Einsatz, die aus einem mit Reingas D (Wasserstoff) als Reaktionsgas gefüllten Puffer 41 und aus der Luft mit Sauerstoff versorgt wird. Der Puffer 41 ist vorzugsweise mit der Reingasleitung 16 über eine Zuführleitung 42 verbunden und nimmt eine ausreichende Menge des von der Vorrichtung zuvor erzeugten Reingases D auf.
Natürlich kann aber auch ein mit Wasserstoff gefüllter separater Speicher die Brennstoffzellen-Einheit 40 mit Wasserstoff versorgen. Die Brennstoffzellen-Einheit 40 besitzt ein Steuerglied 46, das über die Steuerlellung 22 mit. der Steuereinheit 21 verbunden ist.
In die Abzweigleitung 42 von der Reingasleitung 16 zum Puffer 41 ist ein druckgesteuertes Schaltventil 43 integriert. Vom Puffer 41 zur Brennstoffzellen-Einheit 40 führt eine Zuführleitung 44, in die ein druckgesteuertes Schaltventil 45 zum Öffnen oder Schließen der Wasserstoffzufuhr in die Brennstoffzellen-Einheit 40 eingebunden ist. Der Stromanschluss der Brennstoffzellen-Einheit 40 ist über einen Wechselrichter 47 mit der Schalteinrichtung 37 verbunden, die auf Veranlassung der Steuereinheit 21 je nach Erfordernis die Stromversorgung der Verbraucher wie den Gas-Booster 12, den Elektro-Heizkörper 13, die Pumpe 8, Steuereinheit 21 und die Schaltventile 25 bis 28 bzw. 31 bis 34, 43, 45 und 49 zu- oder abschaltet.
Der Schaltvorgang an den Schaltventilen 43 und 45 zum öffnen der Abzweigleitung 42 und Zuführleitung 44 für die Versorgung der Brennstoffzellen-Einheit 40 mit Wassersoff erfolgt in Verbindung mit dem Steuerglied 46 über die Steuerleitung 22 durch die Steuereinheit 21.
Der Wechselrichter 47 wandelt den von der Brennstoffzellen-Einheit 40 erzeugten Strom in Wechselstrom für den Elektro-Heizkörper 13, die Pumpe 8 und den Gas-Booster 12 um.
Die Brennstoffzellen-Einheit 40 ist leistungsmäßig so ausgelegt, dass sie in der Lage ist, die Baugruppen der Vorrichtung solange mit Strom zu versorgen, bis die Regeneration der Adsorber ordnungsgemäß auch bei Fortfall der regenerativen Stromversorgung beendet werden kann. Die Brennstoffzellen-Einheit 40 liefert etwa 3-100 kW.

Es wird jetzt auf die Förderung des in der erfindungsgemäßen Vorrichtung befindlichen Restgases G aus wasserstoffreichem Gas, Prozess-, Rein-, Regenerations- und Desorptionsgas im Kreislauf-Saugbetrieb bei Wegfall der regenerativen Stromversorgung eingegangen.
Die Prozessgasleitung 14 bildet über den durch die offenen Schaltventile 25 bzw. 33 und die geschlossenen Schaltventile 27 bzw. 34 auf Adsorption geschalteten Adsorber 9 und die Regenerationsgasleitung 18 über den durch die offenen Schaltventile 28 bzw. 32 und die geschlossenen Schaltventile 31, 34, 26 bzw. 27 auf Regeneration geschalteten Adsorber 10 mit der Desorptionsgasleitung 19 einen Strömungsweg K für das aus dem Restgas G an den Adsorbern 9 und 10 gebildete Reingas D, das bei geschlossenem Schaltventil 49 vom Reingas D abgezweigte Regenerationsgas E und das Desorptionsgas F.
Das Reingas D wird dabei jeweils in einer Teilmenge T_{R} bei geschlossenem Schaltventil 49 aus der Reingasleitung 16 durch den Gas-Booster 12 angesaugt und die Teilmenge so eingestellt, dass der Volumendurchfluss mit dem Durchflussrechner des Durchflusstransmitters 35 gemessen, ein aktueller Drehzahlwert als Ist-Wert oder ein Drehzahlwert als Fest-Wert aus dem gemessenen Volumendurchfluss ermittelt und dieser Wert an die Steuereinheit 21 übermittelt wird, die diesen Wert dem Frequenzumrichter des Gas-Boosters 12 als Steuergröße vorgibt.
Die Temperatur des Regenerationsgases E wird auf eine der Desorptionstemperatur entsprechende, von einem elektronischen Schaltkreis 20 im Elektro-Heizkörper 13 über die Steuereinheit 21 vorgegebene Soll-Temperatur in Abhängigkeit einer von einem Temperatursensor 17 in Stromrichtung hinter dem Elektro-Heizkörper 13 gemessenen Ist-Temperatur eingeregelt.

Mit dem erfindungsgemäßen Verfahren wird die Trocknung und Reinigung des Prozessgases bei Ausfall der elektrischen Stromversorgung dadurch sichergestellt, dass die Teilmenge T_{R} des Reingases D durch einen an die Regenerationsgasleitung 18 angeschlossenen Gas-Booster 12 mit Frequenzumrichter als Regenerationsgas E angesaugt wird und ein Durchflusstransmitter 35 mit integriertem Durchflussrechner den Volumendurchfluss der Teilmenge T_{R} durch Ermitteln eines aktuellen Drehzahlwertes des Gas-Boosters 12 oder eines Drehzahlwertes des Gas-Boosters 12 als Festwert über die Steuereinheit 21 einstellt, die bei Fortfall der Stromversorgung ein Umschalten der Stromleitung 48 aller stromverbrauchenden Aggregate, wie Gas-Booster 12, Elektro-Heizkörper 13, Steuereinheit 21, Schaltventile 25, 26, 27, 28; 31, 32, 33, 34; 43; 45; 49 und Pumpe 8, durch eine Schalteinrichtung 37 auf eine interne/externe Stromquelle 40 zur temporären Elektroenergieversorgung veranlasst, wobei der Gas-Booster 12 einen Saugstrom-Kreislauf des durch die Adsorber 9, 10 aus dem bei Abschaltung der Stromversorgung in der Vorrichtung vorhandenen Restgas G erzeugten Rein- und Desorptionsgases D, F in einem durch die Gasleitungen 14, 16, 18, 19, 23, 24, 29 und 30, die Adsorber 9,10 und den Elektro-Heizkörper 13 gebildeten Strömungsweg K bis zum ordnungsgemäßen Abschluss der Regeneration aufrechterhält.

Der Strömungsweg K wird durch Absperren der Reingasleitung 16 zum Verbraucher hin mit dem Schaltventil 49 in Stromrichtung hinter der Abzweigung der offengehaltenen Regenerationsgasleitung 18 geschlossen, so dass die Regenerationsgasleitung 18 über den Gas-Booster 12 und Elektroheizkörper 13, die durch die Schaltventile 25, 26, 27 und 28 über die Verbindungsleitungen 23 und 24 auf Regeneration geschalteten Adsorber 9 oder 10, die in die Prozessqasleitung 14 mündende Desorptionsgasleitung 19 der Strömungsweg K durch Absperren der Reingasleitung 16 mit dem Schaltventil 49 zum Verbraucher hin und Offenhalten der Prozessgasleitung 14, der Reingasleitung 16 in die Regenerationsgasleitung 18 über den Elektro-Heizkörper 13, des durch die Schaltventile 25, 26, 27 und 28 über die Verbindungsleitungen 23, 24 auf Adsorption geschalteten Adsorber 9 oder 10, des durch die Schaltventile 31, 32, 33 und 34 über die Verbindungsleitungen 29, 30 auf Regeneration geschalteten Adsorbers 10 oder 9, der in die Prozessgasleitung 14 zurückführenden Desorptionsgasleitung 19, der Prozessgasleitung 14 mit dem Wärmetauscher 6 und Abscheider 7 gebildet wird.

Folgende Schritte werden bei Ausfall der Stromversorgung ausgeführt:
I Einschalten der Stromversorgung durch die interne/ externe Stromquelle 40, beispielsweise einer Brennstoffzellen-Einheit, und Weiterbetrieb der elektrischen Verbraucher der Vorrichtung, wie Gas-Booster 12, Elektro-Heizkörper 13, Pumpe 8, Schaltventile 25 bis 28, 31 bis 34, 43, 45 und 49 sowie Steuereinheit 21,
II Absperren der Reingasleitung 16 durch das Schaltventil 49 zum Verbraucher hin und Bilden des Strömungswegs K,
III Weiterführen der Trocknung/Regeneration durch Fördern der von den Adsorbern 9 und 10 aus dem verbliebenen Restgas erzeugten Rein- und Desorptionsgase D und F mit dem Gas-Booster 12 im Saugstrom-Kreislauf durch den Strömungsweg K, wobei das die Adsorber 9 oder 10 verlassende Rein-/Desorptionsgas D und F im Kreislauf umgewälzt wird bis die Regeneration abgeschlossen ist,
IV Abzweigen einer Teilmenge T_{R} des Reingases D aus der Reingasleitung 16 als Regenexationsgas E und Einstellen dieser Teilmenge durch Messen ihres Volumendurchflusses, Ermitteln eines aktuellen Drehzahlwertes des Gas-Boosters 12 als Ist-Wert oder einen Drehzahlwert als Fest-Wert aus dem gemessenen Volumendurchfluss mit dem im Durchflusstransmitter 35 integrierten Durchflussrechner, Übermitteln des ermittelten Wertes an die Steuereinheit 21, die diesen Wert als Steuergröße dem Frequenzumrichter vorgibt,
V Aufheizen des abgezweigten Regenerationsgases E gemäß Schritt IV durch Einregeln der Temperatur auf eine der Desorptionstemperatur entsprechenden, von einem elektronischen Schaltkreis 20 im Elektro-Heizkörper 13 über die Steuereinheit 21 vorgegebene Soll-Temperatur in Abhängigkeit einer von einem Temperatursensor 17 in Stromrichtung hinter dem Elektro-Heizkörper 13 gemessenen Ist-Temperatur,
VI Rückfuhren des den auf Regeneration geschalteten Adsorber 9 oder 10 verlassenden Desorptionsgases F über die Desorptionsgasleitung 19 in Stromrichtung vor dem Wärmetauscher (Kühler) 6 in die Prozessgasleitung 14,
VII Kühlen des Desorptionsgases F im Kühler 6, Abscheiden des auskondensierten Wassers und Abpumpen des Wassers in die Förderleitung 15 zum Elektrolyseur 1 oder in einen separaten Speicher oder Zwischenspeichern des Wassers im Abscheider 7 mit nachfolgendem Abführen des Wassers,
VIII Zuführen der den Abscheider 7 verlassenden Menge an Desorptionsgas F zur Adsorption des noch vorhandenen Wassers in den auf Adsorption geschalteten Adsorber 9 oder 10, Zuführen des getrockneten Gases als Reingas D über den Filter 11 zum Gas-Booster zwecks erneutem Entnehmen der Teilmenge T_{R} an Reingas D als Regenerationsgas E,
IX Fortführen der Schritte I bis VIII bis die Regeneration abgeschlossen ist.

Bei Wegfall der regenerativen Elektroenergieversorgung kann somit der Betrieb der Regeneration bis zu ihrem Abschluss weitergeführt werden, weil der Elektro-Heizkörper, der Gas-Booster, die Pumpe, die Schaltventile und die Steuereinheit wegen ihres verhältnismäßig geringen Verbrauches an Elektroenergie über die Brennstoffzellen-Einheit 40 oder die USV-Quelle mit Strom versorgt werden können.
Der Gas-Booster 12 befördert dabei das vorhandene Gas im Saugstrom-Kreislauf auf dem von den Gasleitungen und den Adsorbern gebildeten Strömungsweg K bis die Regeneration abgeschlossen ist.
Der Verbrauch an Elektroenergie bis zum Abschluss der Regeneration beträgt etwa 10-300 kWh, die ohne weiteres von einer Brennstoffzellen-Einheit 40 zur Verfügung gestellt werden können.

Die Trocknung und Reinigung des Prozessgases C wird nachfolgend an einem Beispiel näher erläutert.
Ein Volumenstrom von 10.000 Nm³ an wasserstoffreichem Gas B soll bei einem Überdruck von 35 bar so behandelt werden, dass das Reingas D einen Restsauerstoffgehalt < 10 ppm V und einen Restwassergehalt < 5 ppm V erreicht. Die Teilmenge T_{R} an Regenerationsgas E soll etwa 1.000 Nm³/h Reingas D betragen und die Regeneration soll bei mindestens 150 °C mit Silica-Gel als Adsorptionsmittel erfolgen.
Folgende Betriebsdaten liegen zugrunde:
1. Einspeisung wasserstoffreiches Gas B:

| | | | |
|---|---|---|---|
| Volumenstrom: | ca. | 10.000 | Nm³ |
| Druck | ca. | 35 | barü |
| Temperatur | ca. | 55 | °C |
| Sauerstoff gehalt | ca. | 5.000 | ppm V (maximal) |
| Wassergehalt | ca. | 35 | kg/h (gesättigt) |

2. Ausgang am Erhitzer 4

| | | | |
|---|---|---|---|
| Volumenstrom Gas B | ca. | 10.000 | Nm³/h |
| Druck | ca. | 35 | barü |
| Temperatur | ca. | 65 | °C |
| Sauerstoffgehalt | ca. | 5.000 | ppm V |
| Wassergehalt | ca. | 35 | kg/h |

3. Ausgang am Reaktor 5

| | | | |
|---|---|---|---|
| Volumenstrom Gas B | ca. | 9.900 | Nm³/h |
| Druck | ca. | 35 | barü |
| Temperatur | bis ca. | 160 | °C |
| Sauerstoffgehalt | | <10 | ppm V |
| Wassergehalt | ca. | 115 | kg/h |

4. Desorptionsgasstrom (Teilmenge an Reingas D)

| | | | |
|---|---|---|---|
| Volumenstrom Gas B | ca. | 1.000 | Nm³/h |
| Druck | ca. | 35 | barü |
| Temperatur | c.a. | 20-150 | °C |
| Sauerstoffgehalt | | <10 | ppm V |
| Wassergehalt | ca. | 0-25 | kg/h |

5. Ausgang Kühler 6

| | | | |
|---|---|---|---|
| Volumenstrom | ca. | 10.900 | Nm³/h |
| Druck | ca. | 35 | barü |
| Temperatur | ca. | 10 | °C |
| Sauerstoffgehalt | | <10 | ppm V |
| Wassergehalt | ca. | 3 | kg/h |

6. Ausschleusung Kondensat nach Abscheider 7

| | | | |
|---|---|---|---|
| Massestrom | ca. | 115 | kg/h |
| Druck | ca. | 34,8 | barü |
| Temperatur | ca. | 11-20 | °C |

7. Ausgang Adsorber 9 (im Adsorptionszustand)

| | | | |
|---|---|---|---|
| Volumenstrom | ca. | 9.900 | Nm³/h |
| Druck | ca. | 34,8 | barü |
| Temperatur | ca. | 11-20 | °C |
| Sauerstoffgehalt | | <10 | ppm V |
| Wassergehalt | ca. | <5 | ppm V |

8. Regenerationsteilstrom (Eingang Adsorber 10)

| | | | |
|---|---|---|---|
| Volumenstrom | ca. | 1.000 | Nm³/h |
| Druck | ca. | 35 | barü |
| Temperatur | ca. | 20-150 | °C |
| Sauerstoffgehalt | | <10 | ppm V |
| Wassergehalt | | <5 | ppm V. |

Das anfallende Reingas D ist ein hochreines Wasserstoffgas, das den Ansprüchen für die industrielle Nutzung als Gas für die Verwendung in der Petrochemie und in Raffinerien oder Brennstoffzellen vollkommen genügt. Es hat einen Sauerstoffgehalt <10 ppm V und einen Wassergehalt <5 ppm V. Für andere Anwendungen wie z.B. in der Halbleiterindustrie erfolgt eine intensivere Reinigung auf einen Sauerstoffgehalt < 1 ppm V und einen Wassergehalt von ebenfalls < 1 ppm V.

**Bezugszeichenliste**

| | |
|---|---|
| Elektrolyseur | 1 |
| Abführleitung für sauerstoffreiches Gas A | 2 |
| Zuführleitung für wasserstoffreiches Gas B | 3 |
| Erhitzer | 4 |
| Reaktor | 5 |
| Flüssig-Gas-Wärmetauscher (Kühler) | 6 |
| Abscheider | 7 |
| Pumpe | 8 |
| Adsorber | 9, 10 |
| Filter | 11 |
| Gas-Booster | 12 |
| Elektro-Heizkörper | 13 |
| Prozessgasleitung | 14 |
| Förderleitung | 15 |
| Reingasleitung (Reingas D) | 16 |
| Temperatursensor | 17 |
| Regenerationsgasleitung | 18 |
| Desorptionsgasleitung | 19 |
| Schaltkreis | 20 |
| Steuereinheit | 21 |
| Steuerleitung | 22 |
| Fußseitige Verbindungsleitungen | 23,24 |
| Fußseitige druckgesteuerte Schaltventile | 25,26,27,28 |
| Kopfseitige Verbindungsleitungen | 29,30 |
| Kopfseitige druckgesteuerte Schaltventile | 31,32,33,34 |
| Durchflusstransmitter | 35 |
| Einspeiseleitung für regenerativen Strom | 36 |
| Schalteinrichtung | 37 |
| Schalter für regenerativen Strom | 38 |
| Schalter für internen/externen Strom Interne/externe Stromquelle/ | 39 |
| Brennstoffzellen-Einheit | 40 |
| Puffer für Reingas D/Wasserstoff | 41 |
| Abzweigleitung | 42 |
| Schaltventil in 42 | 43 |
| Zuführleitung | 44 |
| Schaltventil in 44 | 45 |
| Steuerglied von 40 | 46 |
| Wechselrichter | 47 |
| Stromleitung für Verbraucher | 48 |
| Schaltventil in 16 | 49 |
| Sauerstoffreiches Gas | A |
| Wasserstoffreiches Gas | B |
| Adsorptionskreis | A_{K} |
| Prozessgas | C |
| Reingas | D |
| Regenerationsgas | E |
| Desorptionsgas | F |
| Restgas aus C, D, E und F | G |
| Strömungsweg | K |
| Regenerationskreis | P_{K} |
| Teilmenge an Reingas D für Regenerationsgas E | T_{R} |

## Patentansprüche

1. Verfahren zum Trocknen und Reinigen von Wasserstoff enthaltenden Gasen, die bei der elektrolytischen Wasserspaltung mit elektrischem Strom in Form eines sauerstoffreichen Gases (A) und eines wasserstoffreichen Gases (B) anfallen, welche Reste des jeweils anderen Gases enthalten, bei dem das sauerstoffreiche Gas (A) in die Atmosphäre oder an einen Verbraucher abgeführt, das wasserstoffreiche Gas (B) in einem Erhitzer (4) erwärmt, das erwärmte Gas (B) in einem Reaktor (5) einer exothermen Reaktion unterworfen wird, in der der Restsauerstoff mit dem Wasserstoff in ein heißes feuchtes Prozessgas (C) umgesetzt wird, sodann das Wasser aus diesem Prozessgas (C) unter Überdruck durch Adsorption des Wassers an einem Adsorptionsmittel in einem von mindestens zwei durch Verbindungsleitungen (23,24;29,30) und Schaltventilen (25,26,27,28; 31,32,33,34) verbundenen Adsorbers (9, 10) solange entfernt wird bis das Adsorptionsmittel im jeweiligen Adsorber (9,10) mit Wasser beladen ist, wobei das getrocknete Prozessgas (C) nach Verlassen des jeweiligen Adsorbers (9,10) über einen Filter (11) als hochreines Wasserstoff-Reingas (D) in einer Reingasleitung (16) zum Verbraucher abgeleitet und das unbehandelte Prozessgas (C) zur Fortführung des Beladungsvorganges auf den unbeladenen Adsorber (9,10) umgelenkt sowie gleichzeitig das beladene Adsorptionsmittel des jeweiligen Adsorbers (9,10) mit einer entgegen der Stromrichtung des in Beladung befindlichen Adsorbers (9,10) in einer Regenerationsgasleitung (18) zugeführten, durch einen Elektro-Heizkörper (13) erhitzten Teilmenge (T_{R}) an Reingas (D) als Regenerationsgas (E) regeneriert wird, wobei eine Steuereinheit (21) die Adsorber (9,10) in Abhängigkeit der Adsorptionsmittelbeladung in die Adsorptions- oder Regenerationsphase umschaltet und alle elektrischen Verbraucher aus der anliegenden elektrischen Stromversorgung über eine Stromleitung (18) gespeist werden, **dadurch gekennzeichnet, dass** die Teilmenge (T_{R}) des Reingases (D) durch einen an die Regenerationsgasleitung (18) angeschlossenen Gas-Booster (12) mit Frequenzumrichter als Regenerationsgas (E) angesaugt wird und ein Durchflusstransmitter (35) mit integriertem Durchflussrechner den Volumendurchfluss der Teilmenge (T_{R}) durch Ermitteln eines aktuellen Drehzahlwertes des Gas-Boosters (12) oder eines Drehzahlwertes des Gas-Boosters (12) als Festwert über die Steuereinheit (21) einstellt, die bei Fortfall der Stromversorgung ein Umschalten aller stromverbrauchenden Aggregate, wie Gas-Booster (12), Elektro-Heizkörper (13), Steuereinheit (21), Schaltventile (25, 26, 27, 28; 31, 32, 33, 34; 43; 45; 49) und ggf. Pumpe (8), auf eine interne/externe Stromquelle (40) zur temporären Elektroenergieversorgung über die Stromleitung (48) durch eine Schalteinrichtung (37) auslöst, wobei der Gas-Booster (12) einen Saugstrom-Kreislauf des aus bei Abschaltung der Stromversorgung vorhandenen, aus dem Restgas (G) an den Adsorbern (9,10) gebildeten Rein- und Desorptionsgases (D, F) auf einem durch die Gasleitungen (14, 16, 18, 19, 23, 24, 29, 30), die Adsorber (9, 10), den Elektro-Heizkörper (13), Wärmetauscher (6), Abscheider (7) und Filter (11) führenden Strömungsweg (K) bis zum ordnungsgemäßen Abschluss der Regeneration erzeugt.

2. Verfahren nach Anspruch 1, **dadurch gakannzeichnet**, dass als Gas-Booster (12) eine trockenlaufende, hermetisch dichte Peripheralradpumpe mit magnetgekuppeltem Antrieb, ein trockenlaufender Drehschieber-Verdichter oder ein Drehkolben-Verdichter verwendet wird.

3. Verlfahren nach Anspruch 1, **dadurch gekennzeichnet, dass** als Durchflusstransmitter (35) ein Wirbelstrommesser mit integriertem Durchflussrechner oder ein Schwebekörpermesser verwendet wird.

4. Verfahren nach Anspruch 1, **dadurch gekennzeichnet, dass** als interne/externe Stromquelle (40) eine Brennstoffzellen-Einheit und/oder eine USV-Quelle und/oder ein Notstromaggregat verwendet wird.

5. Verfahren nach Anspruch 4, **dadurch gekennzeichnet, dass** die Brennstoffzellen-Einheit mit zuvor erzeugtem, in einem Puffer (41) gespeicherten Wasserstoff-Reingas (D) bis zum Abschluss der Regeneration betrieben wird.

6. Verfahren nach Anspruch 4, **dadurch gekennzeichnet, dass** die Brennstoffzellen-Einheit mit Wasserstoff aus einem separaten Wasserstoff-Speicher bis zum Abschluss der Regeneration betrieben wird.

7. Verfahren nach Anspruch 1, **dadurch gekennzeichnet, dass** die Temperatur des Regenerationsgases (E) in Abhängigkeit einer von einem Temperatursensor (17) in der Regenerationsgasleitung (18) in Stromrichtung hinter dem Gas-Booster (12) gemessenen Ist-Temperatur durch ein mit der Steuereinheit (21) kommunizierenden, im Elektro-Heizkörper (13) angeordneten elektronischen Schaltkreis (20) auf eine der Desorptionstemperatur entsprechende Soll-Temperatur eingeregelt wird.

8. Verfahren nach Anspruch 1, **dadurch gekennzeichnet, dass** der Durchflusstransmitter (35) die Anwesenheit oder das Fehlen des Regenerationsgases (E) detektiert und der Durchflussrechner diese Information in einen Schaltbefehl zum Zu- oder Abschalten des Elektro-Heizkörpers (13) umsetzt.

9. Verfahren nach Anspruch 1, **dadurch gekennzeichnet, dass** das Prozessgas (C)/Desorptionsgas (F) in einem dem Reaktor (5) nachgeschalteten Wärmetauscher (6) gekühlt und das beim Kühlen auskondensierte Wasser in einem Abscheider (7) abgeschieden, mit einer Pumpe (8) ausgeschleust oder im Abscheider (7) zwischengespeichert wird.

10. Verfahren nach Anspruch 1, **dadurch gekennzeichnet, dass** der Strömungsweg (K) durch Absperren der Reingasleitung (16) mit dem Schaltventil (49) zum Verbraucher hin und Offenhalten der Prozessgasleitung (14), der Reingasleitung (16) in die Regenerationsgasleitung (18) über den Elektro-Heizkörper (13), des durch die Schaltventile (25, 26, 27, 28) über die Verbindungsleitungen (23, 24) auf Adsorption geschalteten Adsorbers (9, 10), des durch die Schaltventile (31, 32, 33, 34) über die Verbindungsleitungen (29, 30) auf Regeneration geschalteten Adsorbers (10, 9) und der in die Prozessgasleitung (14) zurückführenden Desorptionsgasleitung (19) gebildet wird.

11. Verfahren nach Anspruch 1, **dadurch gekennzei**c**hnet**, dass der Saugstrom-Kreislauf folgende Schritte umfasst:
I Einschalten der interne/externe Stromquelle (40), beispielsweise einer Brennstoffzellen-Einheit, und Weiterbetrieb der elektrischen Verbraucher, wie Gas-Booster (12), Elektro-Heizkörper (13), Pumpe (8), Schaltventile (25 bis 28; 31 bis 34, 43, 45 und 49) und Steuereinheit (21),
II Absperren der Reingasleitung (16) durch das Schaltventil (49) zum Verbraucher hin und Bilden des Strömungswegs (K),
III Weiterführen der Trocknung/Regeneration durch Fördern des von den Adsorbern (9 und 10) aus dem verbliebenen Restgas erzeugten Rein- und Desorptionsgases (D, F) mit dem Gas-Booster (12) im Saugstrom-Kreislauf durch den Strömungsweg (K), wobei das die Adsorber (9 oder 10) verlassende Rein-/Desorptionsgas (D und F) im Kreislauf umgewälzt wird bis die Regeneration abgeschlossen ist,
IV Abzweigen der Teilmenge (T_{R}) des Reingases D aus der Reingasleitung (16) als Regenerationsgas (E) und Einstellen dieser Teilmenge durch Messen ihres Volumendurchflusses, Ermitteln eines aktuellen Drehzahlwertes des Gas-Boosters (12) als Ist-Wert oder einen Drehzahlwert als Fest-Wert aus dem gemessenen Volumendurchfluss mit dem im Durchflusstransmitter (35) integrierten Durchflussrechner, Übermitteln des ermittelten Wertes an die Steuereinheit (21), die diesen Wert als Steuergröße dem Frequenzumrichter des Gas-Boosters (12) vorgibt,
V Aufheizen des abgezweigten Regenerationsgases (E) gemäß Schritt IV durch Einregeln der Temperatur auf eine der Desorptionstemperatur entsprechenden, von einem elektronischen Schaltkreis (20) im Elektro-Heizkörper (13) über die Steuereinheit (21) vorgegebene Soll-Temperatur in Abhängigkeit einer von einem Temperatursensor (17) in Stromrichtung hinter dem Elektro-Heizkörper (13) gemessenen Ist-Temperatur,
VI Rückführen des den auf Regeneration geschalteten Adsorber (9 oder 10) verlassenden Desorptionsgases (F) über die Desorptionsgasleitung (19) in Stromrichtung vor dem Wärmetauscher (6) in die Prozessgasleitung (14),
VII Kühlen des Desorptionsgases (F) im Kühler (6), Abscheiden des auskondensierten Wassers und Abpumpen des Wassers in die Förderleitung (15) zum Elektrolyseur (1) oder in einen separaten Speicher oder Zwischenspeichern des Wassers im Abscheider (7) mit nachfolgendem Abführern des Wassers,
VIII Zuführen der den Abscheider (7) verlassenden Menge an Desorptionsgas (F) zur Adsorption des noch vorhandenen Wassers in den auf Adsorption geschalteten Adsorber (9 oder 10), Zuführen des getrockneten Gases als Reingas (D) über den Filter 11 zum Gas-Booster zwecks erneutem Entnehmen der Teilmenge (T_{R}) an Reingas D als Regenerationsgas (E),
IX Fortführen der Schritte I bis VIII bis die Regeneration abgeschlossen ist.

12. Verfahren nach Anspruch 1, **dadurch gekennzeichnet, dass** als Adsorptionsmittel Silica-Gel, Molekularsiebe oder Aluminiumoxid verwendet werden.

13. Vorrichtung zum Trocknen und Reinigen von Wasserstoff enthaltenden Gasen, die bei der elektrolytischen Wasserspaltung in Form eines sauerstoffreichen Gases (A) und eines wasserstoffreichen Gases (B) anfallen, welche Reste des jeweils anderen abgetrennten Gases enthalten, mit einer an die Einspeiseleitung (36) angeschlossenen Stromleitung (48) zur Versorgung aller Verbraucher der Vorrichtung mit Strom, einer Abführleitung (2) für das sauerstoffreiche Gas (A) in die Atmosphäre oder zum Verbraucher und einer Zuführleitung (3) für das wasserstoffreiche Gas (B), mit einem Erhitzer (4) zum Vorwärmen des wasserstoffreichen Gases (B), einem Reaktor (5) zur Umsetzung von Restsauerstoff und Wasserstoff unter Bildung von Wasser an einem Katalysator zu einem heißen Prozessgas (C), mindestens zwei mit Adsorptionsmittel befüllte Adsorber (9, 10), die zueinander über Verbindungsleitungen (23 , 24; 29, 30) und Schaltventile (25, 26, 27, 28; 31, 32, 33, 34) bei Überdruck in den Adsorptions- und Regenerationszustand und umgekehrt über eine Steuereinheit (21) umschaltbar angeordnet sind und die zwei voneinander unabhängige Adsorptionskreise (AK, RK) bilden, wobei die Adsorber (9, 10) mit dem Reaktor (5) über eine Prozessgasleitung (14) in Verbindung stehen, die das Prozessgas (C) in die Adsorber (9, 10) zur Adsorption des Wassers leitet, und die Adsorber (9, 10) über einen Filter (11) und eine kopfseitige, mit einem Schaltventil (49) absperrbare Reingasleitung (16) zur Ableitung des getrockneten Prozessgases als hochreines Wasserstoff-Reingas (D) zum Verbraucher verbunden sind, und die Adsorber (9, 10) kopfseitig mit einer von der Reingasleitung (16) nach dem Filter (11) abzweigenden Regenerationsgasleitung (18) zum Zuführen einer Teilmenge (T_{R}) des Reingases (D) als Regenerationsgas (E) zum Erhitzen in einem Elektro-Heizkörper (13) und fußseitig mit einer Desorptionsgasleitung (19) zum Ableiten des mit Wasser beladenen Desorptionsgases (F) entgegen der Stromrichtung des Prozessgases (C) des auf Adsorption geschalteten Adsorbers (9,10) verbunden sind, **dadurch gekennzeichnet, dass** an die Regenerationsgasleitung (18) ein Gas-Booster (12) mit Frequenzumrichter zum Ansaugen und Verdichten der Teilmenge (T_{R}) des Reingases (D) und ein Durchflusstransmitter (35) mit integriertem Durchflussrechner zum Ermitteln eines aktuellen Drehzahlwertes des Gas-Boosters (12) als Ist-Wert oder eines Drehzahlwertes als Festwert für den Volumendurchfluss an Regenerationsgas (E) und hinter dem Gas-Booster (12) der Elektro-Heizkörper (13) als Regenerationsgaserhitzer angeschlossen ist, wobei in Stromrichtung hinter dem Elektro-Heizkörper (13) ein Temperatursensor (17) zum Messen der Ist-Temperatur des Regenerationsgases (E) und im Elektro-Heizkörper (13) ein elektronischer Schaltkreis (20) zum Einregeln auf eine der Desorptionstemperatur entsprechende Soll-Temperatur angeordnet ist, und dass der Durchflusstransmitter (35) mit dem Frequenzumrichter und der Schaltkreis (20) mit der Steuereinheit (21) in Verbindung stehen, die bei Fortfall der Stromversorgung alle stromverbrauchenden Aggregate, wie Gas-Booster (12), Elektro-Heizkörper (13), Steuereinheit (21), Schaltventile (25, 26, 27, 28; 31, 32, 33, 34; 43; 45; 49) und ggf. Pumpe (8), auf eine interne/externe Stromquelle (40) zur temporären Elektroenergieversorgung über die Stromleitung (48) mit einer Schalteinrichtung (37) umschaltet, wobei der Gas-Booster (12) einen Kreislauf-Saugstrom des an den Adsorbern (9, 10) aus dem bei Abschaltung der Stromversorgung in der Vorrichtung vorhandenen Restgas (G) gebildeten Rein- und Desorptionsgases (D, F) auf einem durch die Gasleitungen (14, 16, 18, 19, 23, 24, 29, 30), die Adsorber (9,10), den Elektro-Heizkörper (13), den Wärmetauscher (6), Abscheider (7) und Filter (11) führenden Strömungsweg (K) bis zum ordnungsgemäßen Abschluss der Regeneration aufrechterhält.

14. Vorrichtung nach Anspruch 13, **dadurch gekennzeichnet, dass** der Gas-Booster (12) eine trockenlaufende, hermetisch dichte Peripheralradpumpe mit magnetgekuppeltem Antrieb, ein Drehschieber-Verdichter oder ein Drehkolben-Verdichter ist.

15. Vorrichtung nach Anspruch 13, **dadurch gekennzeichnet, dass** der Durchflusstransmitter (35) ein Wirbelstrommesser mit integriertem Durchflussrechner oder ein Schwebekörpermesser ist.

16. Vorrichtung nach Anspruch 13, **dadurch gekennzeichnet, dass** die interne/externe Stromquelle (40) eine Brennstoffzellen-Einheit und/oder eine USV-Quelle und/oder ein Notstromaggregat ist.

17. Vorrichtung nach Anspruch 13, **dadurch gekennzeichnet, dass** ein Puffer (41) zur Speicherung von zuvor erzeugtem Reingas (D) vorgesehen ist, der einerseits über eine durch ein Schaltventil (43) in die Offen- oder Schließlage bringende Abzweigleitung (42) mit der Reingasleitung (16) verbunden ist und andererseits mit der Brennstoffzellen-Einheit (40) über eine durch ein Schaltventil (45) öffnende oder schließende Zuführleitung (44) zum Zutühren des gespeicherten Reingases (D) in die Brennstoffzellen-Einheit (40) in Verbindung steht.

18. Vorrichtung nach Anspruch 13, **dadurch gekennzeiohnct**, dass ein separater Wasserstoff-Speicher vorgesehen ist, der mit der Brennstoffzellen-Einheit (40) über die durch das Schaltventil (45) in die Offen- oder Schließlage bringende Zuführleitung (44) zum Zuführen von Wasserstoff in die Brennstoffzellen-Einheit (40) in Verbindung steht.

19. Vorrichtung nach Anspruch 13, **dadurch gekennzeichnet, dass** die Brennstoffzellen-Einheit (40) ein internes mit der Steuereinheit (21) verbundenes Steuerglied (46) aufweist, das mit einer Schalteinrichtung (37) verbunden ist, die die Brennstoffzellen-Einheit (40) von der Stromversorgung trennt oder mit dieser verbindet.

20. Vorrichtung nach Anspruch 13, **dadurch gekennzeichnet, dass** der Durchflussrechner des Durchflusstransmitters (35) bei einem Fehlen des Regenerationsgases den Elektro-Heizkörper (13) abschaltet bzw. dessen Einschalten verhindert.

21. Vorrichtung nach Anspruch 13, **dadurch gekennzeichnet, dass** der Elektro-Heizkörper (13) über einen Wechselrichter (47) mit der Brennstoffzellen-Einheit (40) elektrisch verbunden ist.

22. Vorrichtung nach Anspruch 13, **dadurch gekennzeichnet, dass** in die Prozessgasleitung (14) der Wärmetauscher (6) zum Kühlen des Prozessgases (C)/Desorptionsgases (F) und der Abscheider (7) zum Abscheiden des auskondensierten Wassers hinteretnander in Stromrichtung des Prozessgases (C) angeordnet sind, wobei der Abscheider (7) über eine Pumpe (8) zum Fördern des auskondensierten Wassers an eine in den Elektrolyseur mündende Förderleitung (15) angeschlossen ist.

23. Vorrichtung nach Anspruch 13, **dadurch gekennzeichnet, dass** die Prozessgasleitung (14) über den Wärmetauscher (6), Abscheider (7) und den durch die Schaltventile (25, 26, 27, 28) auf Adsorption geschalteten Adsorber (9), die zum Verbraucher hin abgesperrte, aber zur Regenerationsgasleitung (18) offene Reingasleitung (16), die Regenerationsgasleitung (18) über den durch die Ventile (31, 32, 33, 34) auf Regeneration geschalteten Adsorber (10) mit der in die Prozessgasleitung (14) zurückführende Desorptionsgasleitung (19) den Strömungsweg (K) bilden, in dem das aus dem in der Vorrichtung befindlichen Restgas (G) gebildete Rein- und Desorptionsgas (D, F) solange im Saugstrom-Kreislauf vom Gas-Booster (12) befördert wird bis die Regeneration abgeschlossen ist.

24. Vorrichtung nach Anspruch 13, **dadurch gekennzeichnet, dass** die Desorptionsgasleitung (19) in Stromrichtung des Prozessgases (C) nach dem Reaktor (5) in die Prozessgasleitung (14) eingebunden ist.

25. Vorrichtung nach Anspruch 13, **dadurch gekennzeichnet, dass** die Pumpe (8), der Gas-Booster (12), der Elektro-Heizkörper (13) die Schaltventile (25 bis 28, 31 bis 34, 43, 45, 49) und die Steuereinheit (21) über die Schalteinrichtung (37) mit der Brennstoffzellen-Einheit (40) oder der USV-Quelle zum Versorgen mit Strom zu- oder abachaltbar verbunden sind.

26. Vorrichtung nach Anspruch 13, **dadurch gekennzeichnet, dass** die Adsorber (9,10) mit Silica-Gel, Molekular-Siebe oder Aluminiumoxid-Gel als Adsorptionsmittel für Wasser befüllt sind.

## Claims

1. Method for drying and purifying hydrogen-containing gases that arise during electrolytic water splitting with electric current in the form of an oxygen-rich gas (A) and a hydrogen-rich gas (B), which contain residues of the other gas, the oxygen-rich gas (A) is discharged into the atmosphere or to a consumer, the hydrogen-rich gas (B) is heated in a heater (4) and subjected to an exothermic reaction in a reactor (5) in which the residual oxygen and the hydrogen are converted into water and a hot, moist process gas (C) is formed, then the water from this process gas (C) is removed under excess pressure by adsorption of the water on an adsorbent in at least two adsorbers (9,10) connected through connecting pipes (23,24;29,30) and switching valves (25,26,27,28;31,32,33,34) until the adsorbent is loaded with water in the respective adsorber (9,10), after leaving the respective adsorber (9,10) the dried process gas (C) is diverted to the consumer via a filter (11) as high-purity hydrogen clean gas (D) in a clean gas pipe (16) and the untreated process gas is transferred to the unloaded adsorber (9,10) for continuing of the loading, and at the same time the loaded adsorbent is regenerated by a partial quantity (TR) of the clean gas (D) as regeneration gas (E) which is heated by an electric heater (13) and the heated gas is fed in a regeneration gas pipe (18) counter to the direction of the flow of the respective adsorber (9,10) that is currently being loaded, wherein a control unit (21) switches the adsorber (9,10) into the adsorption phase and regeneration phase or vice versa depending on the loading of the adsorbent and all electrical users are supplied with electricity from the connected power supply via a power line (48), **characterized in that** a gas-booster (12) with frequency converter, which is connected to the regeneration gas pipe ( (18) sucks in the partial quantity (TR) of the clean gas (D) as regeneration gas (E) and a flow transmitter (35) with an integrated flow computer adjusts the volume flow of the partial quantity (TR) by determining a current rotational speed value of the gas-booster (12) as an actual value or as a fixed value via the control unit (21), which, if the power supply fails, triggers by a switching device (37) a switchover of all electrical power consumer units such as gas-booster (12), control unit (21), switching valves (25,26,27,28; 31,32,33,34;43;45;49) and if necessary the pump (8), to an internal/external power source (40) for temporary electrical energy supply via the power line (48), wherein until the end of the regeneration the gas-booster (12) generates a suction flow circulation of the residual gas (G) that is present when the device switched off on the adsorber (9,10) forming clean and desorption gas (D,F), through an internal flow path (K) that passes through the gas pipes (14, 16, 18, 19, 23, 24, 29, 30, the adsorbers (9,10), the electric heater (13), the heat exchanger (6), separator (7) und filter (11).

2. Method according to claim 1, **characterized in that** a dry-running, hermetically sealed peripheral impeller pump with a magnetically coupled drive or a dry-running rotary vane compressor or a rotary piston compressor is used as gas-booster (12).

3. Method according to claim 1, **characterized in that** an eddy current meter with an integrated flow computer or variable area meter is used as flow transmitter (35).

4. Method according to claim 1, **characterized in that** a fuel cell unit and/or UPS source and/or an emergency power unit and/or a landline connection is used as internal/external power source (40).

5. Method according to claim 4, **characterized in that** the fuel cell unit is operated with previously generated clean hydrogen gas (D) stored in a buffer (41) until the regeneration is complete.

6. Method according to claim 4, **characterized in that** the fuel cell unit is operated with hydrogen from a separate hydrogen storage until the regeneration is complete.

7. Method according to claim 1, **characterized in that** the temperature of the regeneration gas (E) is adjusted by an electronic circuit (20) arranged in the electric heater (13) and connected to the control unit (21) to a target temperature which corresponds to the desorption temperature as a function of an actual temperature measured in the regeneration gas pipe (18) downstream of the gas-booster (12) by a temperature sensor (17).

8. Method according to claim 4, **characterized in that** the flow transmitter (35) detects the presence or absence of the regeneration gas (E) and the flow computer converts this information into an on or off switch command for the electric heater (13).

9. Method according to claim 1, **characterized in that** the process gas (C)/desorption gas (F) is cooled in a heat exchanger (6) connected downstream of the reactor (5) and the water that condenses out during cooling is separated in a separator (7) and is discharged with a pump (8) or is temporarily stored in the separator (7).

10. Method according to claim 1, **characterized in that** the flow path (K) is formed by a turn off the clean gas pipe (16) with the switching valve (49) to the consumer and keeping open the process gas pipe (14), the clean gas pipe (16) into the regeneration gas pipe (18) via the electric heater (13), the adsorber (9,10) switched to adsorption by the switching valves (25,26,27,28) via the connecting pipes (29,30), the adsorber (10,9) switched to regeneration by the switching valves (31,32,33,34) via the connecting pipes (29,30) and the desorption gas pipe (19) which leads back into the process gas pipe (14).

11. Method according to claim 1, **characterized in that** the suction flow circuit comprises following steps:
I switching on the internal/external electric power source (40), for example a fuel cell unit, and continue operating of the electrical consumers, such as gas-booster (12) electric heating element (13), pump (8), switching valves (25 to 28; 31 to 34, 43, 45 and 49) and control unit (21),
II turn off the clean gas pipe (16) to the consumer by the switching valve (49) and forming the flow path (K),
III continuing of the drying/regeneration by conveying the clean and desorption gas (D, F) generated by the adsorbers (9 or 10) from the residual gas with the gas-booster (12) in the suction flow circuit (K), whereby the clean/desorption gas (F, F) is circulated in the circuit until the regeneration is complete,
IV branching off a partial quantity (TR) of the clean gas (D) via the clean gas pipe (16) as regeneration gas (E) and adjusting this partial quantity by measuring its volume flow, determining a current rotational speed value of the gas-booster (12) as an actual or as a fixed speed value from the measured volume flow with the flow computer integrated in the flow transmitter (35), transmitting of the determined value to the control unit (21), which specifies this value as a control variable for the frequency converter of the gas-booster (12),
V heating up the branched-off regeneration gas (E) according to step IV by regulating the temperature to a target temperature corresponding to the desorption temperature, which is specified by an electronic circuit (20) in the electric heater (13) via the control unit (21) as a function of an actual temperature measured by a temperature sensor (17) in flow direction behind the electric heater (1S),
VI Returning of the desorption gas (F) leaving the adsorber (9 or 10) which is switched to regeneration via the desorption gas pipe (19) in the flow direction upstream of the heat exchanger (6) into the process gas pipe (14),
VII cooling of the desorption gas (F) in the cooler (6), separating of the condensed water and pumping out the water into the conveying pipe (15) of the electrolyzer (1) or in a separate storage or intermediate storage of the water in the separator (7) with subsequent discharge the water,
VIII feeding of the quantity of desorption gas (F) leaving the separator (7) for adsorption of the water still present in the adsorber (9 or 10) switched to adsorption, feeding of the dried gas as clean gas (D) via the filter (11) to the gas-booster (12) for the purpose of renewed taking of the partial quantity (TR) of clean gas (D) as regeneration gas (E),
IX continue steps I to VIII until the regeneration is complete.

12. Method according to claim 1, **characterized in that** silica gel, molecular sieves or aluminum oxide gel is used as the adsorbent.

13. Device for drying and purifying hydrogen-containing gases that arise during electrolytic water splitting with electric current in the form of an oxygen-rich gas (A) and a hydrogen-rich gas (B), which contain residues of the other gas, with an electric power line (36) connected to the feed line (48) for supplying all consumers of the device with electricity, a discharge pipe (2) for the oxygen-rich gas (A) into the atmosphere or to a consumer and a feed pipe (3) for the hydrogen-rich gas (B), with a heater (4) for preheating the hydrogen-rich gas (B), a reactor (5) for converting residual oxygen and hydrogen with formation of water on a catalyst to form a hot process gas (C), at least two Adsorbers (9,10) filled with adsorbent, which are arranged switchable under excess pressure into the adsorption and regeneration phase or vice versa by the control unit (21) via connecting pipes (23,24;29,30) and switching valves (25,26,27,31,32,33,34) and to form two independent circuits (AK, RK), wherein the adsorbers (9,10) are connected to the reactor (5) via a process gas pipe (14) which carries the process gas (C) into the adsorber (9,10) for adsorption of the water, and the adsorber (9,10) are connected to the consumer via a filter (11) and a top-side clean gas pipe (16) that can be shut off with a switching valve (58) for discharging the dried process gas as high-purity clean hydrogen gas (D) to the consumer, and the adsorbers (9,10) are connected at the top with a regeneration gas pipe (19) branching off from the clean gas pipe (16) downstream the filter (11) for taking a partial quantity (TR) of the clean gas (D) as regeneration gas (E) for heating in an electric heater (13) and at the bottom with a desorption gas pipe (19) for discharging the desorption gas (F) loaded with water against the direction of flow of the process gas (C) of the adsorber (9,10) switched to adsorption, **characterized in that** a gas-booster (12) with frequency converter is connected to the regeneration gas pipe (18) for suction and compressing the partial quantity (TR) of the clean gas (D) and the gas-booster (12) is connected to a flow emitter (26) with an integrated flow computer for determining a current speed value of the gas-booster (12) as an actual value or a speed value as a fixed value for the volume flow of the regeneration gas (E) and the electric heater (13) is connected behind the gas-booster (12) as the regeneration gas heater, wherein a temperature sensor (17) is arranged in the flow direction behind the electric heater (13) for measuring the actual temperature of the regeneration gas (E) and an electronic circuit (20) is included in the electric heater (13) for adjusting to a target temperature corresponding to the desorption temperature, and that the flow emitter (35) with frequency converter and the electronic circuit (20) are connected to the control unit (21), which, if the power supply fails, triggers by a switching device (37) a switchover of all electric power consumer, such gas-booster (12), electric heater (13), control unit (21), switching valves (25, 26, 27, 28; 31, 32, 33, 34; 43; 45;49) and, if necessary pump (8) to an internal/external power source (40) for temporary electrical power supply via the power line (4), wherein until the properly end of the regeneration the gas-booster (12) maintains a suction flow circulation of the residual gas (G) that is present in the adsorbers (9,10) when the device is switched off for forming clean and desorption gas (D,F) on a flow path (K) that passes through the gas pipes (14, 16, 18, 19, 23, 24, 29, 30), the adsorbers (9,10), the electric heater (13), the heat exchanger (6), the separator (7) and filter (11).

14. Device according to claim 13, **characterized in that** the gas-booster (12) is a dry-running, hermetically sealed peripheral impeller pump with a magnetically coupled drive or a dry-running rotary vane compressor or a rotary piston compressor.

15. Device according to claim 13, **characterized in that** the flow emitter (35) is an eddy current meter with an integrated flow computer or variable area meter.

16. Device according to claim 13, **characterized in that** the internal/external power source (40) is a fuel cell unit and/or UPS source and/or an emergency power unit and/or a landline connection.

17. Device according to claim 13, **characterized in that** a buffer (41) for storing previously generated clean gas (D) is provided, which is connected on the one hand to a branch pipe (42) that can be brought into the open and closed position via switching valve (43), and on the other hand to the fuel cell unit (40), which is connected to a feed pipe (44) that can be opened and closed by a switching valve (45), for feeding the stored clean gas (D) into the fuel cell unit (40).

18. Device according to claim 13, **characterized in that** a separate hydrogen storage device is provided and connected to the fuel cell unit (40) via the feed pipe (44) which is brought into the open or closed position by the switching valve (45) for feeding the hydrogen into the fuel cell unit (40) .

19. Device according to claim 13, **characterized in that** the fuel cell unit (40) has an internal control element (46) which is connected to the control unit (21) and to a switching device (37) that disconnects or connect the fuel cell unit (40) from the feed line of the power supply.

20. Device according to claim 13, **characterized in that** the flow computer of the flow transmitter (35) switches off the electric heater (13) in the absence of the regeneration gas or prevents it from being switched on.

21. Device according to claim 13, **characterized in that** the electric heater (13) is connected electrical to the fuel cell unit (40) via an inverter (47).

22. Device according to claim 13, **characterized in that** a heat exchanger (6) for cooling the process gas (C)/desorption gas (F) and a separator (7) for separating the condensed water are arranged behind each other in the process gas pipe (14), wherein the separator (7) is connected to a pump (8) for conveying the condensed water into the electrolyzer (1) via the conveying pipe (15).

23. Device according to claim 13, **characterized in that** the process gas pipe (14) via heat exchanger (6), the separator (7) and the adsorber (9) switched to adsorption by the switching valves (25, 26, 27, 28), the open clean gas pipe (16) which is closed to the consumer but opened to the regeneration gas pipe (18), the regeneration gas pipe (18) via adsorber (10) switched to regeneration by the valves (31, 32, 33, 34) with the desorption gas pipe (19) leading back to the process gas pipe (14) form the flow path (K), in which the clean and desorption gas (D, F) formed from the residual gas (G) in the device is conveyed in the suction flow circuit by the gas-booster (12) until the regeneration is complete.

24. Device according to claim 13, **characterized in that** the desorption gas pipe 19) is connected to the process gas pipe (14) in flow direction downstream of the reactor (5).

25. Device according to claim 13, **characterized in that** the pump (8), the electric heater (13), the switching valves (25 to 28, 31 to 34, 43, 45, 49) and the control unit (21) are connected to the fuel cell unit (40) or the UPS source which can be switched on or off via the switching device (37) for the supply of electricity.

26. Device according to claim 13, **characterized in that** the Adsorbers (9,10) are filled with silica gel, molecular sieves or aluminum oxide gel as an adsorbent for water.

## Revendications

1. Procédé pour le séchage et la purification de gaz contenant de l'hydrogène, qui apparaissent, lors d'une dissociation électrolytique de l'eau avec un courant électrique, sous la forme d'un gaz riche en oxygène (A) et d'un gaz riche en hydrogène (B), contenant chacun des résidus de l'autre gaz, dans lequel le gaz riche en oxygène (A) est évacué vers l'atmosphère ou vers un consommateur, le gaz riche en hydrogène (B) est chauffé dans un réchauffeur (4), le gaz (B) chauffé est soumis dans un réacteur (5) à une réaction exotherme dans laquelle l'oxygène résiduel est converti, avec l'hydrogène, en un gaz de processus humide très chaud (C), l'eau étant ensuite éliminée de ce gaz de process (C) sous une surpression par l'adsorption de l'eau au niveau d'un produit absorbant dans un parmi au moins deux adsorbeurs (9, 10) reliés par des conduites de liaison (23, 24 ; 29, 30) et soupapes de commutation (25, 26, 27, 28 ; 31, 32, 33, 34) jusqu'à ce que le produit absorbant dans l'adsorbeur (9, 10) correspondant soit chargé en eau, dans lequel le gaz de process (C) séché, après avoir quitté l'adsorbeur (9, 10) correspondant, est dévié, par l'intermédiaire d'un filtre (11), en tant que gaz hydrogène hautement pur (D), dans une conduite de gaz pur (16) vers le consommateur et le gaz de process (C) non traité est dévié, pour la continuation du processus de charge, vers l'adsorbeur (9, 10) non chargé et, simultanément, le produit absorbant de l'adsorbeur (9, 10) correspondant est régénéré avec une quantité partie (T_{R}) de gaz pur (D), en tant que gaz de régénération (E), introduite à l'encontre de la direction d'écoulement de l'adsorbeur (9, 10) se trouvant en charge dans une conduite de gaz de régénération (18) et chauffée par un corps chauffant électrique (13), dans lequel une unité de commande (21) commute les adsorbeurs (9, 10) en fonction de la charge d'adsorption dans la phase d'adsorption ou la phase de régénération et tous les consommateurs électriques sont alimentés à partir de l'alimentation électrique par l'intermédiaire d'une ligne électrique (48), **caractérisé en ce que** la quantité partielle (T_{R}) de gaz pur (D) est aspirée, en tant que gaz de régénération (E), par un booster de gaz (12) raccordé à la conduite de gaz de régénération (18), avec un convertisseur de fréquence, et un transmetteur de débit (35) avec calculateur de débit intégré ajuste le débit volumique de la quantité partielle (T_{R}) en déterminant une valeur de vitesse de rotation actuelle du booster de gaz (12) ou une valeur de vitesse de rotation du booster de gaz (12) en tant que valeur fixe par l'intermédiaire de l'unité de commande (21), qui, en cas de coupure de l'alimentation électrique, déclenche une commutation de tous les agrégats consommant du courant, comme le booster de gaz (12), le corps chauffant électrique (13), l'unité de commande (21), les soupapes de commutation (25, 26, 27, 28 ; 31, 32, 33, 34 ; 43 ; 45 ; 49) et, le cas échéant la pompe (8), vers une source de courant interne/externe (40) pour l'alimentation électrique temporaire par l'intermédiaire de la ligne électrique (48), grâce à un dispositif de commutation (37), dans lequel le booster de gaz (12) génère une circulation de flux d'aspiration du gaz pur et de désorption (D, F), présent lors de l'arrêt de l'alimentation électrique, formé à partir du gaz résiduel (G) au niveau des adsorbeurs (9, 10), sur un trajet d'écoulement (K) conduisant à travers les conduites de gaz (14, 16, 18, 19, 23, 24, 29, 30), les adsorbeurs (9, 10), le corps chauffant électrique (13), un échangeur thermique (6), un décanteur (7) et un filtre (11), jusqu'à l'achèvement correct de la régénération.

2. Procédé selon la revendication 1, **caractérisé en ce que**, en tant que booster de gaz (12), on utilise une pompe à roue périphérique fonctionnant à sec et hermétiquement étanche avec un entraînement magnétique, un compresseur à vanne rotative fonctionnant à sec ou un compresseur à piston rotatif.

3. Procédé selon la revendication 1, **caractérisé en ce que**, en tant que transmetteur de débit (35), on utilise un dispositif de mesure de courants de Foucault avec calculateur de débit intégré ou un dispositif de mesure à flotteur.

4. Procédé selon la revendication 1, **caractérisé en ce que**, en tant que source de courant interne/externe (40), on utilise une unité de pile à combustible et/ou une source USV et/ou un agrégat électrique de secours.

5. Procédé selon la revendication 4, **caractérisé en ce que** l'unité de pile à combustible fonctionne, jusqu'à l'achèvement de la régénération, avec de l'hydrogène gazeux pur (D) généré auparavant et stocké dans un réservoir tampon (41).

6. Procédé selon la revendication 4, **caractérisé en ce que** l'unité de pile à combustible fonctionne, jusqu'à l'achèvement de la régénération, avec de l'hydrogène provenant d'un réservoir d'hydrogène séparé.

7. Procédé selon la revendication 1, **caractérisé en ce que** la température du gaz de régénération (E) est régulée en fonction d'une température réelle mesurée par un capteur de température (17) disposé, dans la conduite de gaz de régénération (18), derrière le booster de gaz (12), dans la direction d'écoulement, grâce à un circuit électronique (20) communiquant avec l'unité de commande (21) et disposé dans le corps chauffant électrique (13), à une température de consigne correspondant à la température de désorption.

8. Procédé selon la revendication 1, **caractérisé en ce que** le transmetteur de débit (35) détecte la présence ou l'absence du gaz de régénération (E) et le calculateur de débit convertit cette information en une instruction pour la mise en marche ou l'arrêt du corps chauffant électrique (13) .

9. Procédé selon la revendication 1, **caractérisé en ce que** le gaz de process (C) / gaz de désorption (F) est refroidi dans un échangeur thermique (6) branché en aval du réacteur (5) et l'eau condensée lors du refroidissement est décantée dans un décanteur (7), évacuée avec une pompe (8) ou stockée dans le décanteur (7).

10. Procédé selon la revendication 1, **caractérisé en ce que** le trajet d'écoulement (K) est constitué par le blocage de la conduite de gaz pur (16) avec la soupape de commutation (49) en direction du consommateur et le maintien ouvert de la conduite de gaz de process (14), de la conduite de gaz pur (16) vers la conduite de gaz de régénération (18) par l'intermédiaire du corps chauffant électrique (13), de l'adsorbeur (9, 10) commuté sur adsorption par les soupapes de commutation (25, 26, 27, 28) par l'intermédiaire des conduites de liaison (23, 24), de l'adsorbeur (10, 9) commuté sur régénération par les soupapes de commutation (31, 32, 33, 34) par l'intermédiaire des conduites de liaison (29, 30) et de la conduite de gaz de désorption (19) retournant vers la conduite de gaz de process (14).

11. Procédé selon la revendication 1, **caractérisé en ce que** la circulation du flux d'aspiration comprend les étapes suivantes :
I. Mise en marche de la source de courant interne/externe (40), par exemple d'une unité de pile à combustible, et continuation du fonctionnement des consommateurs électriques, comme le booster de gaz (12), le corps chauffant électrique (13), la pompe (8), les soupapes de commutation (25 à 28 ; 31 à 34, 43, 45 et 49) et l'unité de commande (21),
II. Blocage de la conduite de gaz pur (16) par la soupape de commutation (49) en direction du consommateur et formation du trajet d'écoulement (K),
III. Continuation du séchage/régénération par le convoyage du gaz pur et de désorption (D, F) produit par les adsorbeurs (9 et 10) à partir du gaz résiduel restant avec le booster de gaz (12) dans le circuit de flux d'aspiration à travers le trajet d'écoulement (K), dans lequel le gaz pur/de désorption (D et F) quittant les adsorbeurs (9 ou 10) est mis en circulation dans le circuit jusqu'à ce que la régénération soit terminée,
IV. Bifurcation de la quantité partielle (T_{R}) du gaz pur D de la conduite de gaz pur (16), en tant que gaz de régénération (E) et ajustement de cette quantité partielle par la mesure de son débit volumique, la détermination d'une valeur de vitesse de rotation actuelle du booster de gaz (12) en tant que valeur réelle ou d'une valeur de vitesse de rotation en tant que valeur fixe à partir du débit volumique mesuré avec un calculateur de débit intégré dans le transmetteur de débit (35), transmission de la valeur déterminée à l'unité de commande (21), qui prédéfinit cette valeur comme une grandeur de contrôle dans le convertisseur de fréquence du booster de gaz (12),
V. Chauffage du gaz de régénération (E) dévié selon l'étape IV par l'ajustement de la température à une température de consigne correspondant à la température de désorption et prédéterminée par un circuit électronique (20) dans le corps chauffant électrique (13) par l'intermédiaire de l'unité de commande (21), en fonction d'une température réelle mesurée par un capteur de température (17) disposé, dans la direction d'écoulement, derrière le corps chauffant électrique (13) ,
VI. Retour du gaz de désorption (F) quittant l'adsorbeur (9 ou 10) commuté sur régénération, par l'intermédiaire de la conduite de gaz de régénération (19) disposée, dans la direction d'écoulement, avant l'échangeur thermique (6), vers la conduite de gaz de process (14),
VII. Refroidissement du gaz de désorption (F) dans le refroidisseur (6), décantation de l'eau condensée et pompage de l'eau dans une conduite de convoyage (15) vers l'électrolyseur (1) ou vers un réservoir séparé ou stockage de l'eau dans le décanteur (7) avec évacuation ultérieure de l'eau,
VIII. Introduction de la quantité de gaz de désorption (F) quittant le décanteur (7), pour l'adsorption de l'eau encore présente, dans l'adsorbeur (9 ou 10) commuté sur adsorption, introduction du gaz séché, en tant que gaz pur (D) par l'intermédiaire du filtre 11 vers le booster de gaz pour une nouvelle élimination de la quantité partielle (T_{R}) de gaz pur D en tant que gaz de régénération (E),
IX. Continuation des étapes I à VIII jusqu'à ce que la régénération soit terminée.

12. Procédé selon la revendication 1, **caractérisé en ce que**, en tant que produit absorbant, on utilise du gel de silice, un tamis moléculaire ou de l'oxyde d'aluminium.

13. Dispositif de séchage et de purification de gaz contenant de l'hydrogène, qui apparaissent, lors d'une dissociation électrolytique de l'eau avec un courant électrique, sous la forme d'un gaz riche en oxygène (A) et d'un gaz riche en hydrogène (B), contenant chacun des résidus de l'autre gaz séparé, avec une ligne électrique (48) raccordée à la ligne d'alimentation (36), pour l'alimentation de tous les consommateurs du dispositif en courant, une conduite d'évacuation (2) pour le gaz riche en oxygène (A) vers l'atmosphère ou vers le consommateur et une conduite d'alimentation (3) pour le gaz riche en hydrogène (B), avec un réchauffeur (4) pour le préchauffage du gaz riche en hydrogène (B), un réacteur (5) pour la transformation de l'oxygène restant et de l'hydrogène, avec formation d'eau au niveau d'un catalyseur, en un gaz de process (C) très chaud, au moins deux adsorbeurs (9, 10) remplis de produit absorbants, qui sont disposés de manière commutable entre eux par l'intermédiaire de conduites de liaison (23, 24 ; 29, 30) et de soupapes de commutation (25, 26, 27, 28 ; 31, 32, 33, 34) lors d'une surpression, dans l'état d'adsorption et de régénération et inversement, par l'intermédiaire d'une unité de commande (21), et qui forment deux circuits d'adsorption (AK, RK) indépendants entre eux, dans lequel les adsorbeurs (9, 10) sont reliés avec le réacteur (5) par l'intermédiaire d'une conduite de gaz de process (14), qui conduit le gaz de process (C) vers les adsorbeurs (9, 10) pour l'adsorption de l'eau, et les adsorbeurs (9, 10) sont reliés, par l'intermédiaire d'un filtre (11) et d'une conduite de gaz pur (16) côté tête, pouvant être bloquée avec une soupape de commutation (49), pour l'évacuation du gaz de process séché en tant qu'hydrogène gazeux pur (D) vers le consommateur, et les adsorbeurs (9, 10) sont reliés, côté tête, avec une conduite de gaz de régénération (18) bifurquant de la conduite de gaz pur (16) après le filtre (11), pour l'introduction d'une quantité partielle (T_{R}) du gaz pur (D) en tant que gaz de régénération (E) pour le chauffage dans un corps chauffant électrique (13) et, côté pied, avec une conduite de gaz de désorption (19), pour l'évacuation du gaz de désorption (F) chargé d'eau à l'encontre de la direction d'écoulement du gaz de process (C) de l'adsorbeur (9, 10) commuté sur adsorption, **caractérisé en ce que**, à la conduite de gaz de régénération (18) est raccordé un booster de gaz (12) avec convertisseur de fréquence, pour l'aspiration et la compression de la quantité partielle (T_{R}) de gaz pur (D) et un transmetteur de débit (35) avec calculateur de débit intégré pour la détermination d'une valeur de vitesse de rotation actuelle du booster de gaz (12) en tant que valeur réelle ou d'une valeur de vitesse de rotation en tant que valeur fixe pour le débit volumique de gaz de régénération (E) et, derrière le booster de gaz (12) est raccordé le corps chauffant électrique (13) en tant que réchauffeur de gaz de régénération, dans lequel, derrière le corps chauffant électrique (13), dans la direction d'écoulement, est disposé un capteur de température (17) pour la mesure de la température réelle du gaz de régénération (E) et, dans le corps chauffant électrique (13), est disposé un circuit électronique (20) pour l'ajustement à une température de consigne correspondant à la température de désorption et **en ce que** le transmetteur de débit (35) est relié avec le convertisseur de fréquence et le circuit (20) est relié avec l'unité de commande (21), qui, en cas de coupure de l'alimentation électrique, commute tous les agrégats consommant de l'électricité, comme le booster de gaz (12), le corps chauffant électrique (13), l'unité de commande (21), les soupapes de commutation (25, 26, 27, 28 ; 31, 32, 33, 34 ; 43 ; 45 ; 49) et, le cas échéant, la pompe (8), sur une source de courant interne/externe (40) pour l'alimentation électrique temporaire par l'intermédiaire de la ligne électrique (48) avec un dispositif de commutation (37), dans lequel le booster de gaz (12) maintient la circulation d'un flux d'aspiration du gaz pur et de désorption (D, F) formé au niveau des adsorbeurs (9, 10) à partir du gaz résiduel (G) présent dans le dispositif lors de l'arrêt de l'alimentation électrique sur un trajet d'écoulement (K) passant par les conduites de gaz (14, 16, 18, 19, 23, 24, 29, 30), les adsorbeurs (9, 10), le corps chauffant électrique (13), l'échangeur thermique (6), le décanteur (7) et le filtre (11), jusqu'à l'achèvement correct de la régénération.

14. Dispositif selon la revendication 13, **caractérisé en ce que** le booster de gaz (12) est une pompe à roue périphérique fonctionnant à sec et hermétiquement étanche avec un entraînement magnétique, un compresseur à vanne rotative ou un compresseur à piston rotatif.

15. Dispositif selon la revendication 13, **caractérisé en ce que** le transmetteur de débit (35) est un dispositif de mesure à courant de Foucault avec calculateur de débit intégré ou un dispositif de mesure à flotteur.

16. Dispositif selon la revendication 13, **caractérisé en ce que** la source de courant interne/externe (40) est une unité de pile à combustible et/ou une source USV et/ou un agrégat électrique de secours.

17. Dispositif selon la revendication 13, **caractérisé en ce qu'**un réservoir tampon (41) est prévu pour le stockage du gaz pur (D) produit auparavant, qui est relié, d'une part par l'intermédiaire d'une conduite d'embranchement (42) amenant une soupape de commutation (43) dans position ouverte ou fermée, avec la conduite de gaz pur (16) et, d'autre part, avec l'unité de pile à combustible (40), par l'intermédiaire d'une conduite d'alimentation (44) s'ouvrant ou se fermant par l'intermédiaire d'une soupape de commutation (45), pour l'introduction du gaz pur (D) stocké dans l'unité de pile à combustible (40).

18. Dispositif selon la revendication 13, **caractérisé en ce qu'**un réservoir d'hydrogène séparé est prévu, qui est relié avec l'unité de pile à combustible (40) par l'intermédiaire de la conduite d'alimentation (44) amenant la soupape de commutation (45) dans la position ouverte ou fermée, pour l'introduction d'hydrogène dans l'unité de pile à combustible (40).

19. Dispositif selon la revendication 13, **caractérisé en ce que** l'unité de pile à combustible (40) comprend un organe de commande (46), relié avec l'unité de commande (21), qui est relié avec un dispositif de commutation (37) qui sépare l'unité de pile à combustible (40) de l'alimentation électrique ou la relie à celle-ci.

20. Dispositif selon la revendication 13, **caractérisé en ce que** le calculateur de débit du transmetteur de débit (35) arrête ou empêche la mise en marche du corps chauffant électrique (13) en l'absence du gaz de régénération.

21. Dispositif selon la revendication 13, **caractérisé en ce que** le corps chauffant électrique (13) est relié électriquement avec l'unité de pile à combustible (40) par l'intermédiaire d'un onduleur (47).

22. Dispositif selon la revendication 13, **caractérisé en ce que**, dans la conduite de gaz de process (14), sont disposés l'échangeur thermique (6) pour le refroidissement du gaz de process (C) / gaz de désorption (F) et le décanteur (7) pour la décantation de l'eau condensée, l'un derrière l'autre dans la direction d'écoulement du gaz de process (C), dans lequel le décanteur (7) est raccordé, par l'intermédiaire d'une pompe (8) pour le transport de l'eau condensée, à une conduite de convoyage (15) débouchant dans l'électrolyseur.

23. Dispositif selon la revendication 13, **caractérisé en ce que** la conduite de gaz de process (14) forme, par l'intermédiaire de l'échangeur thermique (6), du décanteur (7) et de l'adsorbeur (9) commuté sur adsorption par les soupapes de commutation (25, 26, 27, 28), de la conduite de gaz pur (16), bloquée en direction du consommateur mais ouverte en direction de la conduite de gaz de régénération (18), de la conduite de gaz de régénération (18) par l'intermédiaire de l'adsorbeur (10) commuté sur régénération par les soupapes (31, 32, 33, 34), avec la conduite de gaz de désorption (19) retournant vers la conduite de gaz de process (14), le trajet d'écoulement (K), dans lequel le gaz pur et de désorption (D, F), formé à partir du gaz résiduel (G) restant dans le dispositif est transporté dans le flux d'aspiration en circulation par le booster de gaz (12) jusqu'à ce que la régénération soit terminée.

24. Dispositif selon la revendication 13, **caractérisé en ce que** la conduite de gaz de désorption (19) est intégrée dans la conduite de gaz de process (14) après le réacteur (5), dans la direction d'écoulement du gaz de process (C).

25. Dispositif selon la revendication 13, **caractérisé en ce que** la pompe (8), le booster de gaz (12), le corps chauffant électrique (13), les soupapes de commutation (25 à 28, 31 à 34, 43, 45, 49) et l'unité de commande (21) sont reliés, de manière à pouvoir être arrêtés ou mis en marche, par l'intermédiaire du dispositif de commutation (37), avec l'unité de pile à combustible (40) de la source USV pour l'alimentation électrique.

26. Dispositif selon la revendication 13, **caractérisé en ce que** les adsorbeurs (9, 10) sont remplis de gel de silice, de tamis moléculaire ou d'un gel d'oxyde d'aluminium en tant que produit absorbant pour l'eau.
